(19) Europäisches Patentamt
European Patent Office
Office européen des brevets

(11) **EP 3 634 003 B1**

(12) **EUROPÄISCHE PATENTSCHRIFT**

(45) Veröffentlichungstag und Bekanntmachung des Hinweises auf die Patenterteilung:
**15.12.2021  Patentblatt 2021/50**

(21) Anmeldenummer: **19201141.9**

(22) Anmeldetag: **02.10.2019**

(51) Int Cl.:
*H04N 21/436* (2011.01)      *H04N 7/025* (2006.01)
*H04N 7/035* (2006.01)        *H04N 21/41* (2011.01)
*H04N 21/434* (2011.01)       *H04N 21/414* (2011.01)
*H04B 10/116* (2013.01)       *H04N 21/236* (2011.01)

(54) **VERFAHREN UND VORRICHTUNG ZUR ZEITLICHEN SYNCHRONISATION DER OPTISCHEN ÜBERTRAGUNG VON DATEN IM FREIEN RAUM**

METHOD AND DEVICE FOR TIME SYNCHRONIZATION OF THE OPTICAL TRANSMISSION OF DATA IN THE FREE SPACE

PROCÉDÉ ET DISPOSITIF DE SYNCHRONISATION TEMPORELLE DE LA TRANSMISSION OPTIQUE DES DONNÉES DANS L'ESPACE LIBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2018   DE 102018124339**

(43) Veröffentlichungstag der Anmeldung:
**08.04.2020   Patentblatt 2020/15**

(73) Patentinhaber: **Technische Universität Dortmund**
**44227 Dortmund (DE)**

(72) Erfinder:
• **Klein, Johannes**
**59439 Holzwickede (DE)**
• **Xu, Jianshuang**
**44225 Dortmund (DE)**
• **Brauers, Christian**
**45309 Essen (DE)**

(74) Vertreter: **Michalski Hüttermann & Partner Patentanwälte mbB**
**Speditionstraße 21**
**40221 Düsseldorf (DE)**

(56) Entgegenhaltungen:
**DE-A1-102014 008 405      US-A1- 2005 254 714**
**US-A1- 2012 281 987**

**Beschreibung**

Die Erfindung betrifft ein Verfahren zur zeitlichen Synchronisation der optischen Übertragung von Daten im freien Raum von einem Sender zu mindestens einem Empfänger. Auch betrifft die Erfindung eine Vorrichtung zur optischen Übertragung von Daten im freien Raum von einem Sender zu mindestens einem Empfänger.

Die Visible Light Communication (VLC) ist eine vielversprechende Datenübertragungs-technologie, welche in den letzten Jahren immer mehr Bedeutung erlangt hat. Die drahtlose Datenübertragung durch Licht bietet einige Vorteile. Zum einen werden keine knappen Spektrumressourcen belegt, wobei gleichzeitig keinerlei Bedenken bezüglich gesundheitsschädlicher elektromagnetischer Strahlung aufkommen können. Zum anderen kann existierende Hardware (LED-Beleuchtungen, Bildschirme, (Smartphone-)Kameras) für die Übertragung wiederverwendet werden, wobei die primäre Funktion - beispielsweise die Raumbeleuchtung oder die Bildwiedergabe - erhalten bleiben kann. Da stets eine Sichtverbindung zwischen Sender und Empfänger bestehen muss, ist mittels VLC eine kontrollierte, örtlich beschränkte drahtlose Datenverbreitung möglich. Es existieren verschiedene Ansätze, wobei klassischerweise LEDs als Sender und Photodioden als Empfänger verwendet werden. Hierzu wurden in IEEE 802.15.7 bereits 2011 grundlegende Aspekte standardisiert. Es wird aktuell eine Erweiterung des Standards (IEEE 802.15.7m) erarbeitet, welche unter anderem die Verwendung von Kamerasensoren als Empfänger beinhaltet. Man spricht in diesem Fall von Optical Camera Communication (OCC). OCC Systeme lassen sich wiederrum in Display- und LED-basierte Systeme unterteilen. Aufgrund der hohen Anzahl an Pixeln von Displays und Kameras (ca. 2 Millionen bei Full HD) lassen sich bei der Display-basierten OCC (auch Display-Kamera-VLC) durch räumlich parallele Übertragungen (Multiple Input Multiple Output (MIMO)) trotz vergleichsweise niedriger Bildwiedergabe- und Aufnahmeraten hohe Datenraten erzielen. In der heutigen Zeit, in denen sowohl Smartphones mit hochauflösenden Kameras als auch LCD-Bildschirme - sowohl in privaten Haushalten als auch als Werbe- und Informationstafeln - weit verbreitet sind, ist die optische Freiraumübertragung zwischen Display und Kamera besonders attraktiv. Öffentliche Werbe- und Informationsbildschirme in Flughäfen, Bahnhöfen, Museen, etc. könnten so durch Zusatzinhalte (Bild- oder Audiodateien, Internet-Links, etc.) erweitert werden, welche der Nutzer durch kurzes Filmen des Displays anmeldefrei mit dem Smartphone herunterladen kann. Es ist auch denkbar, ein solches System für einen bargeldlosen Zahlungsvorgang zu nutzen, indem der Nutzer durch kurzes Filmen des Displays den Link einer entsprechenden Website zum Bezahlen erhält. Die überlagerte Datenmodulation soll die Bildwiedergabe des Displays nicht beeinträchtigen und sollte daher für den menschlichen Betrachter nicht sichtbar sein.

Aus der DE102014008405A1 ist ein Verfahren zur optischen Übertragung von Daten im freien Raum von einem Sender zu mindestens einem Empfänger bekannt, wobei der Sender eine bildgebende Vorrichtung mit einer Vielzahl an Pixeln ist, die von Bilder repräsentierenden Bilddaten ($s_i(x, y)$) einer Bildfolge ($s_n(x, y)$) angesteuert werden und die zur Übertragung vorgesehenen Daten in eine Datenfolge ($d_n(x, y)$) aus einer eine Anzahl (L) Datenbits umfassender Datenpakete aufgeteilt werden. Bei dem Verfahren wird jedes Datenbit mindestens einem der Pixel zugeordnet und die Datenpakete werden jeweils auf die Bilddaten ($s_i(x, y)$) mindestens eines Bildes der Bildfolge ($s_n(x, y)$) pixelbezogen aufmoduliert. Die Erfindung betrifft ferner eine bildgebende Vorrichtung zur Ausführung des Verfahrens sowie eine videoaufnahmefähige Kamera zum Empfang von optisch von einem Sender im freien Raum übertragenen Daten, die dazu eingerichtet ist, aus den Lichtemissionen von Pixeln des Senders die gemäß dem Verfahren moduliert angesteuert werden, die zur Modulation verwendeten Datenbits zu decodieren und in die ursprünglichen Daten zurück zu wandeln.

Die Realisierung eines derartigen Übertragungsverfahrens erfordert - insbesondere auf Empfängerseite - verschiedene Synchronisations- und Decodieralgorithmen. Eine der größten Herausforderungen stellt hierbei die zeitliche Synchronisation zwischen der Bildwiedergabe des Displays und der Bildaufnahme der Kamera dar. Die Vielzahl an existierenden Displays und Smartphone-Kameras erschweren diese Aufgabe zusätzlich.

Bei dem in dem Stand der Technik beschriebenen Übertragungsverfahren werden einer Bildwiedergabe auf einem elektronischen Display Daten in Form örtlich begrenzter Helligkeitsoder Farbänderungen überlagert, welche von einer den Bildschirm filmenden Kamera decodiert werden können. Ein zu übertragendes Datenpaket wird hierbei einzelnen Pixeln oder einer Gruppe von Pixeln zugeordnet. Aufgrund der hohen Auflösung moderner Flachbildschirme und Kamerasensoren existiert demnach eine Vielzahl an örtlich verteilten und parallel verwendbaren Übertragungskanälen, wodurch eine hohe Datenrate erzielt werden kann. Um die Separation der Daten vom Bildinhalt des Videos im Empfänger gewährleisten zu können, wird eine differentielle Form der Modulation verwendet. Hierzu wird jedes Datenbit zweimal übertragen, wobei das Vorzeichen bei der zweiten Übertragung invertiert ist. Bei gleichzeitiger Wiederholung des Bildinhalts ist eine Trennung der Daten vom Bildinhalt im Empfänger durch Differenzbildung möglich.

$$\text{Bildinhalt} + \text{Daten} - (\text{Bildinhalt} - \text{Daten}) = 2 \times \text{Daten} \tag{1}$$

Ausgehend von dem oben genannten Stand der Technik liegt der Erfindung somit die Aufgabe zugrunde, die zeitliche Synchronisation zwischen der Bildwiedergabe eines Displays und der Bildaufnahme einer Kamera für die optische Freiraumübertragung zwischen Display und Kamera zu verbessern.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur zeitlichen Synchronisation der optischen Übertragung von Daten im freien Raum von einem Sender zu mindestens einem Empfänger angegeben, wobei der Sender eine bildgebende Vorrichtung mit einer Vielzahl an Pixeln ist, die von Bilder repräsentierenden Bilddaten einer Bildfolge angesteuert werden und die zur Übertragung vorgesehenen Daten in eine Datenfolge aus einer eine Anzahl Datenbits umfassender Datenpakete aufgeteilt werden und jedes Datenbit mindestens einem der Pixel zugeordnet wird, und dass die Datenpakete jeweils auf die Bilddaten mindestens eines Bildes der Bildfolge pixelbezogen in Form einer Amplitudenmodulation aufmoduliert werden, wobei das Aufmodulieren der Bilddaten zeitlich differenziell erfolgt, die Bildfolge aus Bildpaaren aufeinanderfolgender Bilder gebildet wird und dass die Datenfolge aus pixelbezogenen Datenpaketen gebildet ist, von denen jedes zweite zu überlagernde pixelbezogene Datenpaket dem vorhergehenden ersten zu überlagernden pixelbezogenen Datenpaket mit umgekehrtem Vorzeichen entspricht, und dass jedes erste zu überlagernde pixelbezogene Datenpaket jedem ersten Bild eines Bildpaares und jedes zweite zu überlagernde pixelbezogene Datenpaket jedem zweiten Bild des Bildpaares überlagert wird, und im Empfänger zur Rückgewinnung der Datenfolge aus jedem Bildpaar durch pixelweise Subtraktion des jeweils zweiten Bildes eines Bildpaars vom ersten Bild des gleichen Bildpaars ein Differenzbild generiert wird, der Empfänger eine zur bildgebenden Vorrichtung beabstandet anzuordnende videoaufnahmefähige Kamera umfasst, wobei die Kamera die von der bildgebenden Vorrichtung ausgesendete Bildfolge empfängt, dadurch gekennzeichnet, dass eine beliebige zeitliche Aufnahmephase für eine Bildaufnahme durch die Kamera zugelassen wird, wobei ein beliebiger Aufnahme-Startzeitpunkt für die Bildaufnahme durch die Kamera zugelassen wird, eine beliebige Realisierung einer für die bildgebende Vorrichtung typischen zeilenweise zeitversetzten Aktualisierung des Bildinhalts erfolgt, eine beliebige Realisierung eines Auslesetimings und damit zusammenhängenden Shuttertimings der empfangenden Kamera zugelassen wird und eine Synchronisation nachträglich, auf Basis der zeitlich nicht synchronisiert aufgenommenen Bildaufnahmen, durchgeführt wird.

Erfindungsgemäß ist außerdem eine Vorrichtung zur Durchführung des Verfahrens nach einem der vorherigen Ansprüche angegeben.

Grundidee der vorliegenden Erfindung ist es also, eine zeitliche Synchronisation zwischen der Bildaufnahme der empfangenden Kamera und der Bildwiedergabe der bildgebenden Vorrichtung bei der optischen Freiraumübertragung zu erzielen, indem eine Synchronisation durch Nachverarbeitung der, bezüglich des zeitlichen Verhaltens, insbesondere bezüglich der Aufnahmephase, nicht synchronisiert aufgenommenen Bildaufnahmen der Kamera durchgeführt wird. Dadurch ist keine aktive Synchronisation, das heißt keine Synchronisation des Kameratimings, insbesondere bezüglich der Aufnahmephase, auf das Timing der Bildwiedergabe vor der eigentlichen Bildaufnahme für die Datenübertragung notwendig, um eine funktionierende optische Freiraumübertragung auf Basis der zeitliche differentiellen Modulation zu realisieren. Dies hat den Vorteil gegenüber einer denkbaren aktiven Synchronisation vor der eigentlichen Bildaufnahme, dass die Zeit, die der Nutzer die empfangenden Kamera auf die bildgebende Vorrichtung ausrichten muss, reduziert wird, da ein aktiver Synchronisationsprozess vor der eigentlichen Bildaufnahme für den Empfang des zu übertragenden Datenpakets, aufgrund der Tatsache, dass bei dem angedachten Verfahren zur optischen Freiraumübertragung neben dem optischen Übertragungskanal kein weiterer Übertragungskanal, welcher z. B. für die Synchronisation verwendet werden könnte, angedacht ist, nur auf Basis einer Auswertung von zuvor unsynchronisiert aufgenommenen Bildaufnahmen durchgeführt werden kann. Dieser im Falle einer aktiven Synchronisation des Kameratimings vor der eigentlichen Bildaufnahme durchzuführende Bildaufnahme- und Bildauswerteprozess sowie die anschließende auf Basis der Bildauswertung durchgeführte Anpassung des Kameratimings würde demnach eine gewisse Zeitdauer benötigten, die sich zu der Zeitdauer hinzuaddieren würde, die der Nutzer die empfangende Kamera während der Bildaufnahme der eigentlichen Nutzdaten auf die bildgebende Vorrichtung ausrichten muss. Da die Akzeptanz eines solchen Datenübertragungsverfahrens voraussichtlich zum großen Teil von der Geschwindigkeit der Übertragung und damit von der Zeitdauer, die der Nutzer die Kamera auf die bildgebende Vorrichtung ausrichte muss, abhängt, ist die in der vorliegenden Erfindung nachträgliche, d. h. nach der nicht synchronisierten Bildaufnahme, welche sofort nach der örtlichen Ausrichtung der Kamera auf die bildgebende Vorrichtung durchgeführt werden kann, durchgeführte Synchronisation ein vorteilhaftes Konzept.

Es ist bekannt, dass typische bildgebende Vorrichtungen wie LCD- oder OLED-Displays, welche für die optische Freiraumübertragung als Sender angedacht sind, eine Aktualisierung des Bildinhalts bei einem Wechsel von einem Bild einer dargestellten Bildfolge zum nächsten Bild der dargestellten Bildfolge nicht für alle darstellenden Pixel der bildgebenden Vorrichtung parallel durchführen, sondern zeilenweise zeitversetzt. Je nach Hersteller und Modell der bildgebenden Vorrichtung kann die Realisierung eines solchen zeilenweisen Scanverhaltens variieren, was bedeutet, dass der Zeitversatz zwischen der Aktualisierung der ersten und der Aktualisierung der letzten Zeile eines Displays variieren kann. Es ist ebenfalls bekannt, dass auch viele Kameras, insbesondere Smartphone-Kameras, bei der Bildaufnahme ein solches zeilenweises Scanverhalten aufweisen, was bedeutet, dass nicht alle lichtaktiven Elemente des Bildsensors der Kamera gleichzeitig, sondern zeilenweise zeitversetzt belichtet und ausgelesen werden. Man spricht in diesem Fall von einem Rolling-Shutter Sensor. Bei Global-Shutter Kamerasensoren wird die Belichtung und das Auslesen der lichtaktiven Elemente hingegen für den gesamten Sensor zeitgleich durchgeführt. Ein Vorteil der vorliegenden Erfindung ist es, dass die Realisierung dieses zeitlichen Scanverhaltens, sowohl von der bildgebenden Vorrichtung als auch von der Kamera, irrelevant für die erfolgreiche Durchführung der Synchronisation sind. Im Falle einer aktiven Synchronisation des Kameratimings müsste das Timing der Bildaufnahme der Kamera sehr präzise in allen Parametern, insbesondere bezüglich des Zeitversatzes zwischen dem Auslesen der ersten und der letzten Zeile des Bildsensors, auf das Timing der Bildwiedergabe der bildgebenden Vorrichtung synchronisiert werden, was bei dem Großteil der auf dem Markt verfügbaren Kameras, insbesondere Smartphone-Kameras, nicht ohne weiteres möglich ist. Im Vergleich zu einer denkbaren aktiven Synchronisation bietet die vorliegende Erfindung demnach den Vorteil, dass eine Synchronisation der Bildwiedergabe der bildgebenden Vorrichtung und der Bildaufnahme der Kamera ohne eine vollständige Kontrolle des Kameratimings durchgeführt werden kann, was eine Realisierung auf vielen verschiedenen Kameras, insbesondere auf solchen, bei denen die Einstellungsmöglichkeiten des zeitlichen Verhaltens der Bildaufnahme beschränkt sind, wie z. B. bei Smartphone-Kameras, ermöglicht, ohne einen erweiterten Zugriff auf die Steuerung des zeitlichen Verhaltens des Kamerasensors zu benötigen.

In einer vorteilhaften Ausgestaltung der Erfindung ist die Bildfolge eine Bildfolge aufeinanderfolgender Bildpaare identischer Bilder mit jeweils identischen Bilddaten.

Erfindungsgemäß besitzt die videoaufnahmefähige Kamera für eine Bildaufnahme der Kamera eine Bildaufnahmerate $f_C$ und eine Belichtungszeit $t_{exp}$, die bildgebende Vorrichtung für eine Bildwiedergabe der bildgebenden Vorrichtung eine Bildwiedergaberate $f_D$ und eine mittlere Reaktionszeit $\overline{t_R}$, wobei die Belichtungszeit $t_{exp}$ und die Bildaufnahmerate $f_C$ gemäß folgendem mathematischen Zusammenhang eingestellt werden:

$$t_{exp} \leq \frac{1}{f_D} - \frac{1}{f_C} - \overline{t_R}$$

$$f_C \geq \left( \frac{1}{f_D} - t_{exp} - \overline{t_R} \right)^{-1}$$

Durch die aufgestellten mathematischen Zusammenhänge sind die minimale benötigte Bildaufnahmerate $f_C$ bzw. die maximale zulässige Belichtungszeit $t_{exp}$ der Kamera in Abhängigkeit des jeweils anderen der genannten Kameraparameter und der Bildwiedergaberate $f_D$ und der mittleren Reaktionszeit $\overline{t_R}$ der bildgebenden Vorrichtung angegeben, bei denen sichergestellt ist, dass alle Bildabschnitte aller Bilder der von der bildgebenden Vorrichtung dargestellten Bildfolge in den Bildaufnahmen der Kamera vollständig, d. h. ohne Vermischung mit zeitlich benachbarten Bildern der Bildfolge, vorhanden sind, wodurch eine Rekonstruktion aller Bilder der von der bildgebenden Vorrichtung dargestellten und von der empfangenden Kamera aufgenommenen Bildfolge im Empfänger möglich ist. Es ist demnach das Gleichzeichen in beiden Formeln anzustreben, da in diesem Fall ein optimaler Arbeitspunkt erreicht ist, bei dem die vollständige Rekonstruktion aller Bilder der sendeseitigen Bildfolge möglich ist und gleichzeitig die Bildaufnahmerate fc der Kameraaufnahme unter den gegebenen Umständen nur so groß wie nötig gewählt ist bzw. die unter den gegebenen Umständen maximal für die erfolgreiche Synchronisation mögliche Belichtungszeit $t_{exp}$ ausgenutzt wird.

Weiter erfindungsgemäß werden alle Bildaufnahmen der Kamera in vertikaler Bildrichtung in $n_v$ gleich große Bildabschnitte unterteilt, wobei die zeitliche Synchronisation zwischen der Bildwiedergabe der bildgebenden Vorrichtung und der Bildaufnahme der Kamera für jeden vertikalen Bildabschnitt separat durchgeführt wird. Aufgrund des möglicherweise unterschiedlichen zeitlichen Scanverhalts bildgebender Vorrichtungen und Kameras in vertikaler Bildrichtung sowie der Abweichung der Bildaufnahmerate fc von der Bildwiedergaberate $f_D$ entstehen bei der unsynchronisierten Bildaufnahme durch die Kamera Mischbilder, d. h. Bildaufnahmen, die in einem oberen räumlichen Bildabschnitt eine Aufnahme eines anderen Bildes der sendeseitigen Bildfolge enthalten als in einem unteren Teil der Bildaufnahme. Die räumlich vertikalen Positionen dieser möglicherweise auftretenden Bildübergänge innerhalb der Kameraaufnahmen sind dem Empfänger nicht bekannt und variieren im Falle von $f_C \neq f_D$ bei verschiedene zeitlich aufeinanderfolgenden Kameraaufnahmen. Um die dadurch entstehende, für verschiedene Bildabschnitte unterschiedliche Phasenbeziehung zwischen der Bildwiedergabe und der Bildaufnahme zu berücksichtigen, werden die Bildaufnahmen im Empfänger in $n_v$ vertikale räumliche Bildabschnitte unterteilt und die Synchronisation für jeden Bildabschnitt separat durchgeführt, wobei hierbei approximiert wird, dass die Phasenbeziehung zwischen der Bildwiedergabe und der Bildaufnahme innerhalb eines räumlich vertikalen Abschnitts konstant ist. Ein Vorteil dieser Vorgehensweise ist es, dass auf diese Weise beliebige Kombinationen an Realisierungen des räumlich-zeitlichen Scanverhaltens der bildgebenden Vorrichtung und der empfangenden Kamera für die Datenübertragung zugelassen sind, selbst wenn das die Scanrichtung des räumlich-zeitlichen Scanverhaltens von Display und Kamera gegenläufig sind.

Erfindungsgemäß wird eine zeitliche Synchronisation zwischen der Bildwiedergabe der bildgebenden Vorrichtung und der Bildaufnahme der Kamera dadurch erzielt, dass im Empfänger nach der Bildaufnahme eine Rekonstruktion der senderseitigen Bildfolge auf Basis der Bildaufnahmen durchgeführt wird, indem für jeden vertikalen Bildabschnitt eine separate Zuordnung der Bildabschnitte innerhalb der Bildaufnahmen der Kamera zu den Einzelbildern der senderseitigen Bildfolge durchgeführt wird.

Weiter Erfindungsgemäß geschieht die abschnittsweise Rekonstruktion der Bilder der durch die bildgebende Vorrichtung dargestellten Bildfolge auf Basis der Bildaufnahmen im Empfänger dadurch, dass bildabschnittweise die Bildpaare der senderseitigen Bildfolge innerhalb der Bildaufnahmen gesucht werden, indem in jedem vertikalen Bildabschnitt alle Differenzbildabschnitte aus allen potentiell für die Erzeugung eines Differenzbildabschnitts in Frage kommenden Paaren von Bildabschnitten aus den zeitlich aufeinanderfolgenden Bildaufnahmen erzeugt werden und miteinander verglichen werden, wobei der Differenzbildabschnitt, welcher ein bezüglich eines mittleren Signalpegels stärkstes, durch die Aufmodulation des pixelbezogenen Datenpakets entstehendes, Datensignal aufweist, innerhalb des jeweiligen vertikalen Bildabschnitts für die anschließende Differenzbilderzeugung verwendet wird. Es wird demnach die bekannte Korrelation zwischen zwei pixelbezogenen Datenpaketen, die einem Bildpaar der Bildfolge bei der zeitlich differentiellen Modulation überlagert werden, ausgenutzt, wobei die Korrelation derart ist, dass beide einem Bildpaar überlagerten pixelbezogenen Datenpakete bis auf das Vorzeichen gleich sind.

In einer weiter vorteilhaften Ausgestaltung der Erfindung wird ein Vergleichskriterium für den Vergleich der abschnittsweise erzeugten potentiellen Differenzbildabschnitte definiert, wobei hierfür die Summe der Beträge aller Pixelwerte $B_{sum}(k_X, k_Y, n)$ des jeweiligen Differenzbildabschnitts n, welcher aus den Bildaufnahmen $k_X$ und $k_Y$ durch pixelweise Subtraktion erzeugt wurde, nach folgender Formel verwendet wird:

$$B_{sum,modCh}(k_X, k_Y, n) = \sum_{p=1}^{W} \sum_{q=(n-1)\cdot H+1}^{n\cdot H} |r_{modCh}(p, q, k_X) - r_{modCh}(p, q, k_Y)|$$

Es gilt hierbei:

| | |
|---|---|
| $k_X, k_Y$ | Index Bildaufnahme Nr. X, $Y$ |
| $N$ | Laufindex der vertikalen Bildabschnitte, $n=1..n_v$ |
| $p, q$ | Bildsensor-Pixelkoordinaten der Bildaufnahmen |
| $W, H$ | Bildbreite W und Bildhöhe H der Bildaufnahmen in Bildsensor-Pixelkoordinaten |
| $modCh$ | Modulierter Farbkanal der Bildaufnahmen, wobei ein modulierter Farbkanal ein Farbkanal innerhalb eines Farbraums ist, welcher senderseitig für die pixelbezogene Aufmodulation der Datenfolge verwendet wurde |
| $r_{modCh}(p, q, I_X)$ | Intensitätswert, wobei hiermit die Höhe der Amplitude der digitalen Repräsentation eines Bildes gemeint ist, des Farbkanals $modCH$ an den Bildsensor-Koordinaten $p$ und $q$ in Bildaufnahme X |

In einer vorteilhaften Ausgestaltung der Erfindung wird ein erweitertes Vergleichskriterium definiert, bei dem $B_{sum}(k_X, k_Y, n)$ jeweils für einen modulierten Farbkanal und für einen nicht für die Datenmodulation verwendeten Farbkanal, also einen nicht modulierten Farbkanal, berechnet wird, wobei ein modulierter Farbkanal ein Farbkanal innerhalb eines Farbraums ist, welcher senderseitig für die pixelbezogene Aufmodulation der Datenfolge verwendet wurde, wobei das erweiterte Vergleichskriterium im Anschluss wie folgt berechnet wird:

$$B_{sum,erweitert}(k_X, k_Y, n) = \frac{B_{sum,modulierter\ Farbkanal}(k_X, k_Y, n)}{\sqrt{B_{sum,nicht\ modulierter\ Farbkanal}(k_X, k_Y, n)}}$$

Der Vorteil hierbei ist, dass ein Vergleich der potentiell erzeugten Differenzbilder mit dem erweiterten Vergleichskriterium auch dann zu einem zuverlässigen richtigen Ergebnis führt, wenn die senderseitige, durch die pixelbezogenen Datenpakete modulierte Bildfolge eine Bildfolge mit großen Differenzen bezüglich der Bildinhalte aufeinanderfolgender Bildpaare ist, also eine Bildfolge eines Videos ist, in dem viele Bewegungen des Bildinhalts auftreten. Die in dieser Erfindung vorgelegte zeitliche Synchronisation, funktioniert durch Verwendung des erweiterten Vergleichskriteriums folglich unabhängig davon, ob es sich bei der von der bildgebenden Vorrichtung dargestellten Bildfolge um ein Standbild oder eine Videosequenz mit Bewegungen handelt.

Die Aufgabe der Erfindung wird zudem durch ein Verfahren zur zeitlichen Synchronisation der optischen Übertragung von Daten im freien Raum von einem Sender zu mindestens einem Empfänger angegeben, wobei der Sender eine bildgebende Vorrichtung mit einer Vielzahl an Pixeln ist, die von Bilder repräsentierenden Bilddaten einer Bildfolge angesteuert werden und die zur Übertragung vorgesehenen Daten in eine Datenfolge aus einer eine Anzahl Datenbits umfassender Datenpakete aufgeteilt werden und jedes Datenbit mindestens einem der Pixel zugeordnet wird, und dass die Datenpakete jeweils auf die Bilddaten mindestens eines Bildes der Bildfolge pixelbezogen in Form einer Amplitudenmodulation aufmoduliert werden, wobei das Aufmodulieren der Bilddaten zeitlich differenziell erfolgt, die Bildfolge aus Bildpaaren aufeinanderfolgender Bilder gebildet wird und dass die Datenfolge aus pixelbezogenen Datenpaketen gebildet ist, von denen jedes zweite zu überlagernde pixelbezogene Datenpaket dem vorhergehenden ersten zu überlagernden pixelbezogenen Datenpaket mit umgekehrtem Vorzeichen entspricht, und dass jedes erste zu überlagernde pixelbezogene Datenpaket jedem ersten Bild eines Bildpaares und jedes zweite zu überlagernde pixelbezogene Datenpaket jedem zweiten Bild des Bildpaares überlagert wird, und im Empfänger zur Rückgewinnung der Datenfolge aus jedem Bildpaar durch pixelweise Subtraktion des jeweils zweiten Bildes eines Bildpaars vom ersten Bild des gleichen Bildpaars ein Differenzbild generiert wird, der Empfänger eine zur bildgebenden Vorrichtung beabstandet anzuordnende videoaufnahmefähige Kamera umfasst, wobei die Kamera die von der bildgebenden Vorrichtung ausgesendete Bildfolge empfängt, dadurch gekennzeichnet, dass eine beliebige zeitliche Aufnahmephase für eine Bildaufnahme durch die Kamera zugelassen wird, wobei ein beliebiger Aufnahme-Startzeitpunkt für die Bildaufnahme durch die Kamera zugelassen wird, eine beliebige Realisierung einer für die bildgebende Vorrichtung typischen zeilenweise zeitversetzten Aktualisierung des Bildinhalts erfolgt, eine beliebige Realisierung eines Auslesetimings und damit zusammenhängenden Shuttertimings der empfangenden Kamera zugelassen wird und eine Synchronisation nachträglich, auf Basis der zeitlich nicht synchronisiert aufgenommenen Bildaufnahmen, durchgeführt wird.

Erfindungsgemäß wird jedem Bildpaar das gleiche pixelbezogene Datenpaket überlagert. Vorteilhaft ist hierbei, dass dadurch, dass jedem Bildpaar das gleiche pixelbezogene Datenpaket überlagert wird, die Sichtbarkeit der überlagerten zeitlich differentiellen Amplitudenmodulation für den menschlichen Betrachter im Vergleich zu dem Fall, dass jedem Bildpaar bei ansonsten gleichen Modulationsparametern ein neues pixelbezogenes Datenpaket überlagert wird, reduziert wird, da hierbei durch den konstanten zeitlichen Wechsel von einer modulationsbedingten Erhöhung und einer modulationsbedingten Absenkung des Helligkeitswerts eines Pixels oder eines Subpixels der bildgebenden Vorrichtung, wie z. B. dem für bildgebende Vorrichtungen typischen roten oder blauen Subpixel, im Vergleich weniger zeitlich niederfrequente Komponenten entstehen als bei dem genannten anderen Fall, was für die Angestrebte Unsichtbarkeit der Datenmodulation für den menschlichen Betrachter von Vorteil ist, da zeitlich niederfrequente Helligkeits- oder Farbwechsel vom menschlichen Auge bekanntermaßen stärker wahrgenommen werden als zeitliche hochfrequente Helligkeits- oder Farbwechsel.

Weiter erfindungsgemäß werden jeweils eine Gruppe von *bs* x bs Pixeln der bildgebenden Vorrichtung zu einem Datenblock zusammengefasst, welcher durch das gleiche Datenbit der Datenfolge moduliert wird, wobei zusätzlich eine senderseitige örtliche Filterung jedes pixelbezogenen Datenpakets mit folgender Filtermatrix durchgeführt wird:

$$\overbrace{\begin{bmatrix} 1 & \cdots & 1 & -1 & \cdots & -1 \\ \vdots & \ddots & \vdots & \vdots & \ddots & \vdots \\ 1 & \cdots & 1 & -1 & \cdots & -1 \\ -1 & \cdots & -1 & 1 & \cdots & 1 \\ \vdots & \ddots & \vdots & \vdots & \ddots & \vdots \\ -1 & \cdots & -1 & 1 & \cdots & 1 \end{bmatrix}}^{bs} \Bigg\} bs$$

Vorteilhaft ist hierbei, dass durch die Filterung mit der angegebenen Filtermatrix die sichtbare Datenblockgröße, also die zweidimensionale Menge an örtlich nebeneinander liegender Pixel der bildgebenden Vorrichtung, die mit gleicher Amplitude und mit gleichem Vorzeichen moduliert wird, auf ein Viertel der sichtbaren Blockgröße reduziert wird, die durch die Modulation ohne eine Filterung des pixelbezogenen Datenpakets mit der angegebenen Filtermatrix entstehen würde. Die Überlagerung des gefilterten pixelbezogenen Datenpakets enthält somit feinere örtliche Strukturen als ohne Filterung, ist also örtlich hochfrequenter, was wiederum die Sichtbarkeit für den menschlichen Betrachter bei ansonsten gleichen Modulationsparametern reduziert, da die Flimmerwahrnehmung des menschlichen Auges bekanntermaßen auch von der räumlichen Frequenz der flimmernden Fläche abhängt.

Erfindungsgemäß werden im Empfänger aus der Menge an vorhandenen Bildaufnahmen der Kamera das bezüglich des überlagerten pixelbezogenen Datenpakets gleiche Differenzbild mehr als einmal erzeugt und die entstehenden bezüglich des pixelbezogenen Datenpakets gleichen Differenzbilder pixelweise aufsummiert, wodurch ein im Vergleich zu einem einzelnen Differenzbild ein verbessertes Signal-zu-Rausch-Verhältnis entsteht. Das Signal-zu-RauschVerhältnis wird bei der pixelweisen Aufsummierung mehrerer bezüglich des überlagerten pixelbezogenen Datenpakets gleichen Differenzbilder verbessert, da das auf dem Kamerasensor bei der Bildaufnahme entstehende Rauschen, insbesondere das Schrotrauschen, für zeitlich aufeinanderfolgende Bildaufnahmen statistisch unabhängig ist.

Allgemein ist bekannt: Bei der additiven Überlagerung zweier digitaler Signale, welche bezüglich der Nutzsignalkomponente gleich und damit korreliert sind, bei denen aber das jeweils überlagerte Rauschen, welches in beiden Fällen die gleiche Rauschleistung aufweist, unkorreliert ist, das Signal-zu-Rausch-Verhältnis um einen Faktor zwei besser wird als das Signal-zu-Rauschverhältnis der jeweiligen einzelnen Signale, wobei genau dieser Umstand in dem in diesem Anspruch beschriebenen Verfahrensschritt ausgenutzt wird.

Weiter erfindungsgemäß wird jede Bildaufnahme der Kamera oder jedes der erzeugten Einzel-Differenzbilder im Empfänger vor der Weiterverarbeitung einer örtlichen Filterung mit der gleichen Filtermatrix unterzogen, mit der jedes pixelbezogene Datenpaket senderseitig örtlich gefiltert wurde. Die empfängerseitige örtliche Filterung des Differenzbildes oder der Einzelbildaufnahmen mit der gleichen Filtermatrix, mit der das pixelbezogene Datenpaket senderseitig gefiltert wurde, bietet insgesamt drei Vorteile. Erstens wird eine, hinsichtlich des im Empfänger resultierenden Signal-zu-Rausch-Verhältnisses, optimale Filterung durchgeführt (Matched Filter Ansatz, aus der Literatur bekannt).

Zweitens wird die Detektion der optimalen örtlichen Abtastpunkte innerhalb der im Empfänger erzeugten Differenzbilder durch die empfängerseitige Filterung erleichtert, da durch diese Filterung, sofern das pixelbezogene Datenpaket senderseitig der gleichen örtlichen Filterung unterzogen wurde, jeweils Amplituden-Peaks in den optimalen örtlichen Abtastpunkten entstehen, welche durch entsprechende Bildauswertungsalgorithmen leichter detektiert werden können als die Mittelpunkt rechteckiger Datenblöcke, wie sie ohne eine sender- und empfängerseitige örtliche Filterung im Differenzbild im Empfänger auftreten würden.

Drittens werden durch die Filterung teilweise unerwünschte Signalanteile in den erzeugten Differenzbildern, die aus Bildinhaltsdifferenzen der für die Erzeugung eines Differenzbilds benötigten aufeinanderfolgenden Bilder der sendeseitig dargestellten Bildfolge und nicht aus dem überlagerten pixelbezogenen Datenpaket resultieren, herausgefiltert, insbesondere solche Signalanteile aus Bildinhaltsdifferenzen, die über einen gesamten Datenblock der Größe $bs \times bs$ eine konstante Amplitude aufweisen, also innerhalb eines Datenblocks der Größe $bs$ x bs einen Gleichanteil darstellen.

Erfindungsgemäß werden die erzeugten und örtlich gefilterten Differenzbilder vorzeichenrichtig aufsummiert, wobei ab dem zweiten erzeugten Differenzbild probeweise dem ersten Differenzbild, oder den bis zu diesem Zeitpunkt bereits aufsummierten vorherigen Differenzbildern, das jeweils neu aufzusummierende Differenzbild einmal mit positivem und einmal mit negativem pixelweisen Vorzeichen additiv überlagert wird und im Anschluss in einem Vergleich der beiden probeweise aufsummierten Differenzbilder ermittelt wird, bei welchem Vorzeichen das im aufsummierten Differenzbild enthaltene, durch die senderseitige Aufmodulation des pixelbezogenen Datenpakets entstehende, Datensignal am stärksten ist.

In einer vorteilhaften Ausgestaltung der Erfindung werden für den Vergleich der Stärke des in den probeweise mit positivem und negativem Vorzeichen aufsummierten Differenzbildern enthaltenen Datensignals, die Summe der Beträge der Intensitätswerte, wobei hiermit die Höhe der Amplitude der digitalen Repräsentation des aufsummierten Differenzbildes gemeint ist, aller Pixel der jeweils resultierenden Differenzbilder miteinander verglichen.

In einer weiter vorteilhaften Ausgestaltung der Erfindung wird jede Bildaufnahme der Kamera oder jedes der erzeugten Differenzbilder im Empfänger in $n_v$ gleich große vertikale Bildabschnitte unterteilt, wobei die vorzeichenrichtige Aufsummierung der erzeugten Differenzbilder für jeden vertikalen Bildabschnitt separat durchgeführt wird. Aufgrund des möglicherweise unterschiedlichen zeitlichen Scanverhalts bildgebender Vorrichtungen und Kameras in vertikaler Bildrichtung sowie der Abweichung der Bildaufnahmerate fc von der Bildwiedergaberate $f_D$ entstehen bei der unsynchronisierten Bildaufnahme durch die Kamera Mischbilder, d. h. Bildaufnahmen, die in einem oberen räumlichen Bildabschnitt eine Aufnahme eines anderes Bildes der sendeseitigen Bildfolge enthalten als in einem unteren räumlichen Bildabschnitt der Bildaufnahme. Hierdurch können bei der Erzeugung der, bezüglich des überlagerten pixelbezogenen Datenpakets gleichen Differenzbilder im Empfänger, Differenzbilder entstehen, die in einem oberen räumlichen Abschnitt ein anderes Vorzeichen aufweisen als in einem unteren räumlichen Bildabschnitt. Die räumlich vertikalen Positionen dieser möglicherweise auftretenden Bildübergänge in den Bildaufnahmen und der daraus resultierenden Vorzeichenwechsel innerhalb der erzeugten Differenzbilder sind dem Empfänger nicht bekannt und variieren im Falle von $f_C \neq f_D$ bei verschiedene zeitlich aufeinanderfolgenden Kameraaufnahmen. Um diesen Umstand zu berücksichtigen, werden die Bildaufnahmen im Empfänger in $n_v$ vertikale räumliche Bildabschnitte unterteilt und die Aufsummierung der im Empfänger erzeugten Differenzbilder für jeden vertikalen Bildabschnitt separat durchgeführt, wobei hierbei approximiert wird, dass die Phasenbeziehung zwischen der Bildwiedergabe und der Bildaufnahme innerhalb eines räumlich vertikalen Abschnitts konstant ist. Ein Vorteil dieser Vorgehensweise ist es, dass auf diese Weise beliebige Realisierungen des räumlich-zeitlichen Scanverhaltens der bildgebenden Vorrichtung und der empfangenden Kamera in Kombination für die Datenübertragung zugelassen sind, selbst wenn die Scanrichtung des räumlich-zeitlichen Scanverhaltens von Display und Kamera gegenläufig sind.

In einer weiter vorteilhaften Ausgestaltung der Erfindung wird jedes der erzeugten Differenzbilder im Empfänger in $n_v$ gleich große vertikale und in $n_h$ gleich große horizontale Bildabschnitte unterteilt, wodurch eine zweidimensionale Anordnung aus $n_v$ x $n_h$ Bildabschnitten entsteht, wobei die vorzeichenrichtige Aufsummierung für jeden Bildabschnitt separat durchgeführt wird. Die räumliche zweidimensionale Unterteilung der empfängerseitig erzeugten Differenzbilder in $n_v$ vertikale und $n_h$ horizontale Bildabschnitte und die anschließende separate vorzeichenrichtige Aufsummierung der Differenzbilder hat den Vorteil, dass auf diese Weise die Synchronisation auch dann funktioniert, wenn die Scanrichtung der senderseitigen zeilenweisen Aktualisierung des Bildinhalts der bildgebenden Vorrichtung und die Scanrichtung des zeilenweisen Belichtungs- und Auslesevorgangs durch die empfangende Kamera gegeneinander, insbesondere um 90° oder -90°, rotiert sind. Dies wäre bspw. der Fall, wenn eine regulär im Querformat aufgestellte bildgebende Vorrichtung mit der Kamera eines im Hochformat ausgerichteten Smartphones aufgenommen wird, da beide Zeilenscans in der Regel entlang der kürzeren Kante des Bildschirms der bildgebenden Vorrichtung bzw. des Kamerasensors verlaufen. Dies bietet einen Vorteil, da der Nutzer des Smartphones die Bildaufnahme auf diese Weise einfach mit einer Hand und in der typischen Hochformat-Haltung des Smartphones durchführen kann. Durch die Erweiterung ist die Synchronisation für jeden beliebigen Rotationswinkel um die Sichtverbindungslinie zwischen der bildgebenden Vorrichtung und der empfangenden Kamera möglich.

In einer weiter vorteilhaften Ausgestaltung der Erfindung werden im Anschluss an die abschnittsweise vorzeichenrichtige Aufsummierung der Differenzbilder die möglicherweise unterschiedlichen Vorzeichen der einzelnen Bildabschnitte, falls nötig, aneinander angeglichen, indem die Grenzen zwischen den jeweiligen möglicherweise bezüglich des Vorzeichens anzugleichenden Bildabschnitten miteinander verglichen werden, wobei eine hohe negative Korrelation einen Vorzeichenwechsel und eine hohe positive Korrelation eine Vorzeichengleichheit zwischen zwei benachbarten Abschnitten aufzeigt. Bei der separaten Akkumulation der einzelnen örtlichen Bildabschnitte der im Empfänger erzeugten Differenzbilder kann der Fall auftreten, dass nicht alle Bildabschnitte das gleiche pixelweise Vorzeichen aufweisen. Um ein akkumuliertes Differenzbild zu erhalten, aus welchem im Anschluss die überlagerten Daten rekonstruiert werden können, müssen die Vorzeichen der einzelnen Bildabschnitte aneinander angeglichen werden, was dadurch geschieht, dass im Anschluss an die Aufsummierung der Differenzbilder im aufsummierten Differenzbild alle auftretenden Bildabschnittsgrenzen, welche durch die Bildabschnittsunterteilungen nach Anspruch 15 oder 16 entstehen, untersucht und bewertet werden, indem die jeweils am nächsten zur Abschnittsgrenze gelegenen Bildzeilen bzw. Bildspalten von jeweils zwei örtlich aneinander angrenzenden Bildabschnitten miteinander verglichen werden. Der Vergleich wird derart durchgeführt, dass die zu vergleichende Bildzeile bzw. Bildspalte des ersten Bildabschnitts von der des zweiten Bildabschnitts einmal probeweise pixelweise addiert und einmal probeweise pixelweise subtrahiert wird und im Anschluss für beide Varianten die Summe der Beträge aller resultierenden addierten bzw. subtrahierten Pixelwerte gebildet wird und diese bezüglich der Höhe des resultierenden Wertes verglichen werden. Im Fall, dass die pixelweise Addition der angrenzenden Bildzeilen bzw. Bildspalten einen größeren resultierenden Wert erzeugt als die pixelweise Subtraktion, sind die Vorzeichen der untersuchten angrenzenden Bildabschnitte im aufsummierten Differenzbild gleich, wohingegen im umgekehrten Fall die Vorzeichen der untersuchten angrenzenden Bildabschnitte ungleich sind und eine Angleichung durch pixelweises Invertieren eines der untersuchten Bildabschnitte durchgeführt werden muss.

In einer vorteilhaften Ausgestaltung der Erfindung werden jeweils drei zeitlich aufeinanderfolgende Bilder der bildgebenden Vorrichtung zu einer Bildgruppe zusammengefasst und moduliert, wobei jeweils das erste Bild mit positivem Vorzeichen moduliert wird, das zweite Bild nicht moduliert wird und das dritte Bild mit negativem Vorzeichen moduliert wird. Dieses alternative Modulationsschema für die zeitliche differentielle Modulation bietet den Vorteil, dass bei Verwendung dieses Modulationsschemas eine zeitliche Synchronisation auch dann funktioniert, wenn die Bildaufnahmerate fc der Kamera nicht in etwa gleich, sondern in etwa nur halb oder nur ein Viertel oder nur ein Achtel so hoch ist wie die Bildwiedergaberate $f_D$ der bildgebenden Vorrichtung, also $f_C \approx \frac{f_D}{2}$ oder $f_C \approx \frac{f_D}{4}$ oder $f_C \approx \frac{f_D}{8}$. Dies kann von Vorteil sein, da ein begrenzendes Maß für die optische Freiraumübertragung zwischen einer bildgebenden Vorrichtung und einer empfangenden Kamera die maximale Bildaufnahmerate der Kamera sein kann, da diese kleiner sein kann als die maximale Bildwiedergaberate $f_D$ der bildgebenden Vorrichtung. Durch die Verwendung dieses alternativen Modulationsschemas kann bei der Darstellung der modulierten Bildfolge durch die bildgebende Vorrichtung eine im Vergleich zur maximalen Bildaufnahmerate der Kamera höhere Bildwiederholrate eingestellt werden, was die Sichtbarkeit der überlagerten Modulation zu Gute kommt.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt

Fig. 1 eine Anordnung aus Sender und Empfänger zur optischen Übertragung von Daten im freien Raum,

Fig. 2 eine zeitliche Darstellungsabfolge der Aufmodulation von pixelbezogenen Datenpakete 1, 2 und 3 unter Verwendung der zeitlich differentiellen Modulation mit Bildinhaltswiederholung gemäß einem ersten Ausführungsbeispiel der Erfindung,

Fig. 3 eine zeitliche Darstellungsabfolge der Modulation eines pixelbezogenen Datenpakets unter Verwendung der zeitlich differentiellen Modulation ohne Bildinhaltswiederholung gemäß einem zweiten Ausführungsbeispiel der Erfindung,

Fig. 4a) die räumlich-zeitliche Modellierung des zeitlich-räumlichen Wiedergabeverhaltens typischer LCD-Displays,

Fig. 4b) die räumlich-zeitliche Modellierung des zeitlich-räumlichen Wiedergabeverhaltens typischer Rolling-Shutter CMOS-Kameras

Fig. 5 die räumlich-zeitliche Modellierung einer Bildwiedergabe und einer Bildaufnahme bei gleicher Bildwiedergabe- und Bildaufnahmerate $f_C = f_D$ bei drei verschiedenen zufälligen Phasenlagen der Bildaufnahme, wobei die Scanrichtung des zeilenweisen Scanverhaltens von Display und Kamera in der Fig. 5 a) und b) gleich und in der Fig. 5 c) gegenläufig ist,

Fig. 6 die räumlich-zeitliche Modellierung einer Bildwiedergabe gemäß einem ersten Ausführungsbeispiel der Erfindung und einer Bildaufnahme für $f_C > f_D$,

Fig. 7 die räumlich-zeitliche Modellierung einer Bildwiedergabe gemäß einem ersten Ausführungsbeispiel der Erfindung und einer Bildaufnahme für $f_C > f_D$ bei gegenläufigem Scanverhalten von Display und Kamera,

Fig. 8 die räumlich-zeitliche Modellierung einer Bildwiedergabe gemäß einem ersten Ausführungsbeispiel der Erfindung und einer Bildaufnahme für $f_C = f_D$, einmal mit gleicher Scanrichtung und einmal mit entgegengesetzter Scanrichtung des zeilenweisen Scanverhaltens von Display und Kamera,

Fig. 9 die Unterteilung einer Full HD Bildaufnahme in $n_v = 10$ gleich große vertikale räumliche Bildabschnitte,

Fig. 10 die zweidimensionale Unterteilung einer Full HD Bildaufnahme in $n_v = 5$ mal $n_h = 8$ gleich große räumliche Bildabschnitte,

Fig. 11 die räumlich-zeitliche Modellierung einer Bildwiedergabe gemäß einem ersten Ausführungsbeispiel der Erfindung und einer Bildaufnahme für $f_C > f_D$ mit einer beispielhaften Unterteilung der Bildaufnahmen in $n_v = 5$ vertikale räumliche Bildabschnitte,

Fig. 12 die räumlich-zeitliche Modellierung einer Bildwiedergabe gemäß einem zweiten Ausführungsbeispiel der Erfindung und einer Bildaufnahme für fc = fo,

Fig. 13 ein Signalflussdiagramm des Empfängers gemäß einem zweiten Ausführungsbeispiel der Erfindung,

Fig. 14 die räumlich-zeitliche Modellierung einer Bildwiedergabe gemäß einem zweiten Ausführungsbeispiel der Erfindung und einer Bildaufnahme für $f_C > f_D$ mit einer beispielhaften Unterteilung der Bildaufnahmen in $n_v = 5$ vertikale räumliche Bildabschnitte,

Fig. 15 eine alternative zeitliche Darstellungsabfolge der Modulation eines pixelbezogenen Datenpakets unter Verwendung der zeitlich differentiellen Modulation ohne Bildinhaltswiederholung gemäß einem weiteren Ausführungsbeispiel der Erfindung.

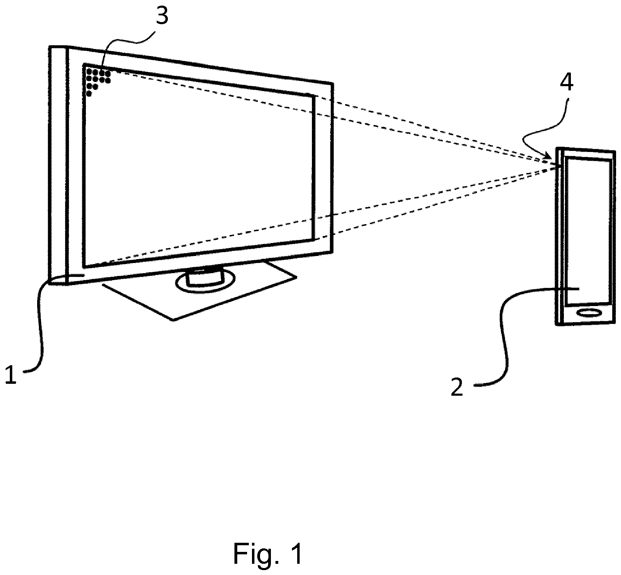

Die Figur 1 zeigt eine Anordnung zur optischen Übertragung von Daten im freien Raum von einem Sender 1 zu einem Empfänger 2. Der Sender 1 ist eine bildgebende Vorrichtung 1 mit einer Vielzahl an Bildpunkten 3, hier in Gestalt eines Fernsehers mit Flachbildschirm. Der Empfänger 2 ist ein mobiles Endgerät zur Telekommunikation wie beispielsweise ein Smartphone mit integrierter Kamera 4 zur Aufnahme der übertragenen Daten. Bei den vom Sender 1 zum Empfänger 2 zu übertragenden Daten handelt es sich um ein Bildsignal, das auf dem Fernseher 1 visualisiert wird und üblicherweise Bewegtbilder enthält, überlagerte Daten. Der Fernseher 1 erhält somit neben dem üblichen Bildsignal zusätzliche Daten.

Bei den zu übertragenden Daten kann es sich um Nutzdaten oder Steuerdaten handeln. So können beispielsweise Fotos oder Musikstücke während des Fernsehens aus dem Internet oder einem lokalen Netzwerk geladen und über die erfindungsgemäße Freiraumübertragung vom Fernseher 1 zum Endgerät 2 übertragen werden. Auch können Steuerdaten beispielsweise von einem Bus der Gebäudeautomation vom Fernseher zum Endgerät übertragen werden und auf diese Weise beliebige Geräte wie Licht, Heizung, Jalousien, Beamer, etc. gesteuert werden.

Ein Signalprozessor im Fernseher 1 moduliert die Daten auf das Fernsehbild unsichtbar für einen Betrachter. Die Kamera 4 im Smartphone 2 nimmt das modulierte Fernsehbild auf. Ein Prozessor mit implementiertem Demodulator und Decoder führt eine Demodulation und Decodierung zur Gewinnung der Daten aus dem Fernsehbild aus und liefert die Daten für die Applikation auf dem Endgerät 2. Der Nutzer muss die Kamera 4 hierfür lediglich grob ausrichten. Der Empfänger 2 muss aber kein mobiles Endgerät sein. Er kann auch stationär im Raum angeordnet sein.

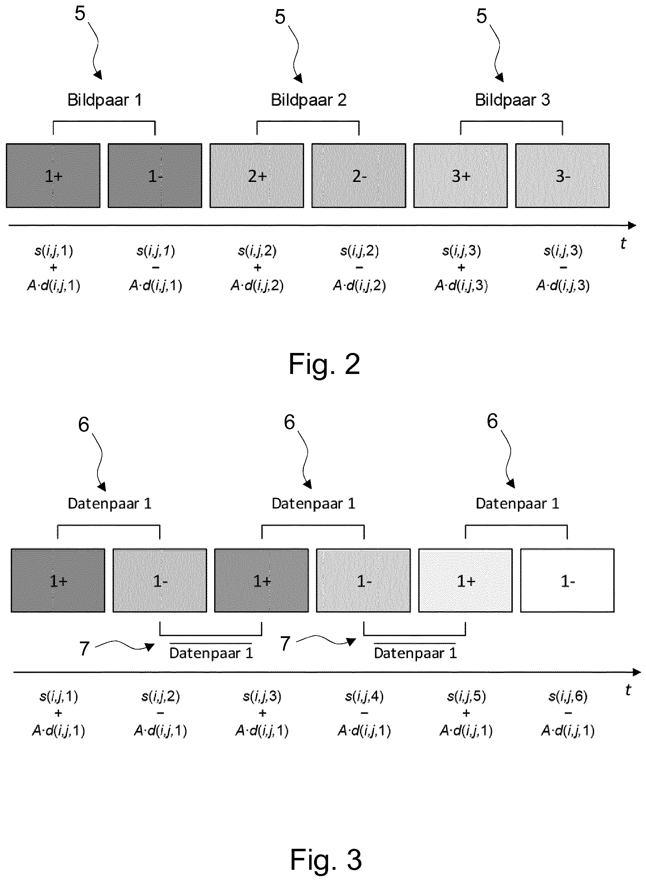

Die Figur 2 zeigt eine zeitliche Darstellungsabfolge sechs aufeinanderfolgender Bilder einer Bildfolge. Innerhalb des dargestellten zeitlichen Abschnitts werden drei pixelbezogene Datenpakete $d(i, j, m)$ differentiell übertragen, wobei die zeitlich differentielle Modulation mit Bildinhaltswiederholung gemäß einem ersten Ausführungsbeispiel der Erfindung verwendet wird. Bei der zeitlich differentiellen Modulation gemäß einem ersten Ausführungsbeispiel der Erfindung ist eine Bild- und Datenwiederholung in zeitlicher Richtung implementiert, was bedeutet, dass jedes Einzelbild der ursprünglichen Videosequenz einmal wiederholt wird. Zwei gleiche, aufeinanderfolgende Einzelbilder des Videos werden zu einem Bildpaar 5 zusammengefasst. Ein pixelbezogenes Datenpaket $d(i, j, m)$ wird auf das erste Bild eines Bildpaares 5 mit positivem und auf das zweite Bild des gleichen Bildpaares 5 mit negativem Vorzeichen überlagert. Im Empfänger 2 wird zur Rückgewinnung der Daten die Differenz aus den Aufnahmen der beiden modulierten Bildpaare 5 erzeugt. Zur Erhöhung des Datendurchsatzes wird jedem Bildpaar 5 der Bildfolge ein neues pixelbezogenes Datenpaket $d(i, j, m)$ zugeordnet.

Die Figur 3 zeigt eine zeitliche Darstellungsabfolge der Modulation eines pixelbezogenen Datenpakets $d(i, j, m)$ unter Verwendung der zeitlich differentiellen Modulation ohne Bildinhaltswiederholung gemäß einem zweiten Ausführungsbeispiel der Erfindung. Beim zweiten Ausführungsbeispiel wird genau wie beim ersten Ausführungsbeispiel die zeitlich differentielle Modulation verwendet. Der wesentliche Unterschied ist, dass nicht ein kontinuierlicher Datenstrom, sondern nur ein Datenpaket begrenzter Größe übertragen wird. Ausgehend von Figur 2 wird demnach jedem Bildpaar 5 das gleiche pixelbezogene Datenpaket $d(i, j, m)$ überlagert. Das Konzept sieht vor, dass nur eine kleine Datenmenge - wie beispielsweise ein Internet-Link - übertragen werden soll. Durch Ausnutzung der Redundanz in zeitlicher Richtung - die Kamera empfängt das gleiche pixelbezogene Datenpaket $d(i, j, m)$ mehr als einmal - kann die Übertragung auch unter Verwendung sehr kleiner Modulationsamplituden robust werden. Des Weiteren wird bei diesem zweiten Ausführungsbeispiel auf eine Wiederholung des Bildinhalts verzichtet. Hierdurch soll das Verfahren auch bei einer möglichen Beschränkung der maximalen Bildwiedergaberate auf 25 oder 30 Hz funktionieren. Die zeitliche Wiederholung des Bildinhalts würde die Bildinhaltswiedergabe andernfalls auf unzureichende 12,5 bzw. 15 Hz beschränken. Figur 3 zeigt die zeitliche Darstellungsabfolge gemäß dem zweiten Ausführungsbeispiel ohne Bildinhaltswiederholung. Es ist erkennbar, dass sich das pixelbezogene Datenpaket $d(i, j, m)$ unter Vernachlässigung von Bildinhaltsänderungen im Empfänger 2 theoretisch aus jeder Differenz beliebiger aufeinanderfolgender Display-Einzelbilder erzeugen lässt, wobei das Vorzeichen des Differenzbildes in jedem zweiten Datenpaar 7 invertiert ist. Durch Aufsummierung mehrerer Differenzbilder des gleichen Datenpaars 6 oder 7 kann das Signal-zu-Rausch-Verhältnis des Differenzbildes verbessert werden, wodurch die Robustheit der Übertragung mit der Anzahl der für die Differenzbilderzeugung verwendeten Bildaufnahmen 12 zunimmt. Ziel der zeitlichen Synchronisation beim zweiten Ausführungsbeispiel ist es, ein Differenzbild durch die vorzeichenrichtige Aufsummierung mehrerer Einzel-Differenzbilder zu erzeugen, wobei berücksichtigt werden soll, dass sich der Bildinhalt der parallel auf der bildgebenden Vorrichtung dargestellten Bildfolge in jedem Bild ändern kann.

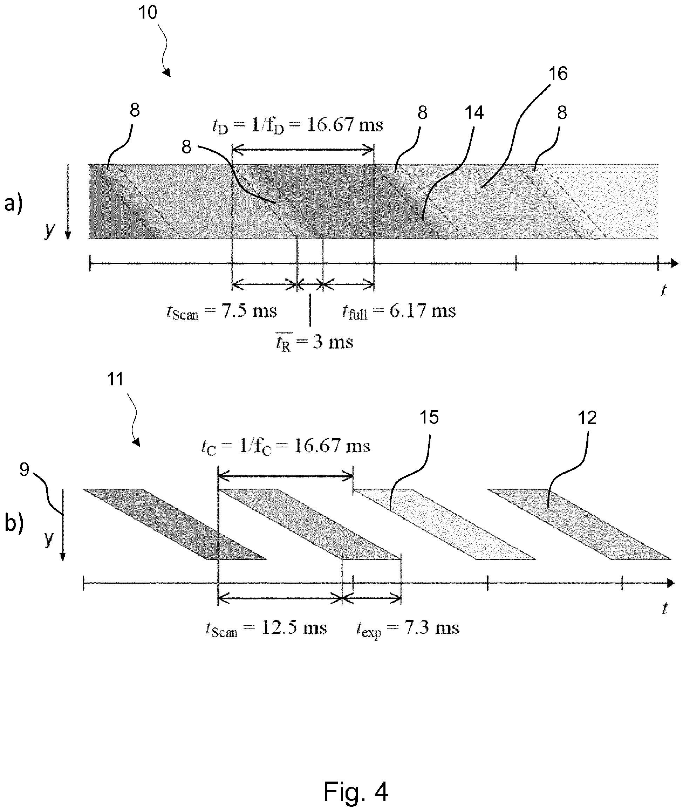

Die Figur 4a) zeigt die Modellierung 10 des räumlich-zeitlichen Wiedergabeverhaltens typischer LCD-Displays. Es ist bekannt, dass LCD- oder OLED-Bildschirme (sowohl TV-Geräte als auch Computermonitore) in zeitlicher Richtung eine Rechteckapertur aufweisen. Hierbei wird der der Bildinhalt typischerweise über die gesamte mögliche Anzeigedauer eines Einzelbildes (z. B. 20 ms bei 50 Hz) aufrechterhalten. Eine mögliche Pulsweitenmodulation des LED-Hintergrundlichts bei LCD-Bildschirmen oder eine Black-Frame Insertion bei OLED-Bildschirmen sei an dieser Stelle außen vorgelassen. Die Aktualisierung des Bildinhaltes beim Übergang 8 von einem Einzelbild 16 zum nächsten während der Wiedergabe eines Videos geschieht hierbei jedoch in der Regel nicht zeitsynchron für alle Pixel, sondern zeilenweise zeitversetzt 14. Die Figur 4a) zeigt dieses zeitlich-räumliche Wiedergabeverhalten beispielhaft anhand einer Bildwiedergabe mit 60 Bildern pro Sekunde, was einer Bildanzeigedauer von 16,67 ms entspricht. Die horizontale Achse repräsentiert in dieser Darstellung die zeitliche Dimension. Die vertikale Achse repräsentiert die vertikale räumliche Dimension des Displays, d. h., dass der Ursprung von $y$ die oberste Zeile des Displays repräsentiert. Die durch unterschiedliche Helligkeitsstufen gekennzeichneten Bereiche stellen jeweils ein Bild der Bildfolge 16 dar. Die zeitliche Differenz $t_{Scan}$ zwischen der Aktualisierung der ersten und der Aktualisierung der letzten Zeile beträgt in diesem Fall etwa 7,5 ms und die mittlere Reaktionszeit des hier beispielhaft modellierten LCD-Displays beträgt $\overline{t_R}$ = 3 ms was im Umkehrschluss bedeutet, dass der Bildinhalt eines Einzelbildes nicht für $t_D$ = 16,67 ms, sondern für eine Zeitdauer von $t_{full}$ = 6,17 ms vollständig, d. h. von allen Pixeln gleichzeitig, dargestellt wird. Es sei an dieser Stelle angemerkt, dass die Realisierung dieses Scanverhaltens 14 von Displays nicht einheitlich ist, sondern von Gerät zu Gerät variiert. Messungen im Labor haben ergeben, dass Displays existieren, bei denen $t_{Scan}$ nur geringfügig kleiner ist als $t_D$, sodass zu praktisch keinem Zeitpunkt alle Zeilen des Displays den gesamten Bildinhalt eines Einzelbildes 16 darstellen. Bei der Messung eines anderen Displays stellte sich heraus, dass das Scanverhalten 14 in entgegengesetzter Richtung realisiert wurde, was bedeutet, dass die Zeilenaktualisierung bei der untersten Zeile beginnt und die oberste Zeile als letztes aktualisiert wird.

Fig. 4 b) zeigt die räumlich-zeitliche Modellierung der Bildaufnahme 11 einer CMOS-Kamera, wobei vier Einzelbilder der Bildaufnahme 12 abgebildet sind. Die horizontale Achse repräsentiert in dieser Darstellung die zeitliche Dimension. Die vertikale Achse repräsentiert die vertikale räumliche Dimension 9 des Kamerasensors bzw. der Bildaufnahme. Es ist bekannt, dass auch bei CMOS-Kamerasensoren ein solches räumlich-zeitliches Scanverhalten weit verbreitet ist. Man spricht in diesem Fall von einem Rolling-Shutter-Sensor. Bei Rolling-Shutter-Sensoren werden die lichtaktiven Elemente des Kamerasensors nicht gleichzeitig, sondern zeilenweise zeitlich versetzt ausgelesen und belichtet, was bei Aufnahmen von Bewegung zu dem bekannten Rolling-Shutter-Effekt führt. Der zeitliche Versatz zwischen der Belichtung aufeinanderfolgender Sensorzeilen kann hierbei - genau wie der zeitliche Versatz der Zeilenaktualisierung der Displaywiedergabe 14 - variieren. Im Kontrast dazu stehen Global-Shutter-Sensoren, deren Realisierung eine gleichzeitige Belichtung aller lichtaktiven Sensorelemente zulässt. Für Smartphone-Kameras ist jedoch die Verwendung von Rolling-Shutter-Kamerasensoren sehr verbreitet.

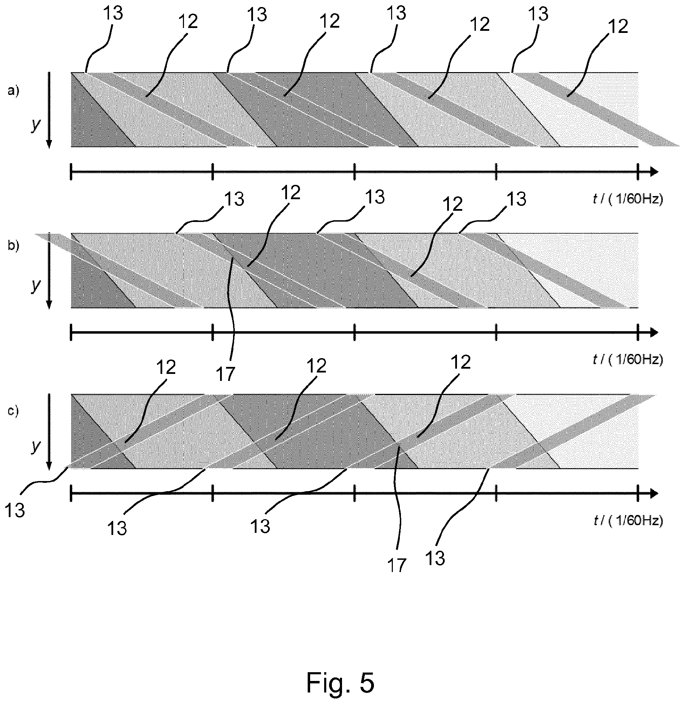

Die Figur 5 zeigt beispielhaft die räumliche-zeitliche Modellierung 10 und 11 verschiedener Wiedergabe-Aufnahme-Kombinationen, welche sich bei der Aufnahme einer 60 Hz Bildwiedergabe 10 mit einer Rolling-Shutter-Kamera bei einer Bildaufnahmerate von fc = 60 Bildern pro Sekunde und einer Belichtungszeit von $t_{exp} \approx 3ms$ 3 ohne Phasensynchronisation - also bei zufälliger Aufnahmephase 13 - ergeben können. 5 a) und 5 b) stellen hierbei Fälle dar, in denen die Orientierung der Scanrichtung von Kamera und Display gleich sind. Aufgrund des zufälligen Aufnahmestartzeitpunktes der Kamera kommt es bei dem in Figur 5 b) dargestellten Szenario zu einer Vermischung von Bildinhalten innerhalb der Bildaufnahmen 12 und dadurch entstehende Bildübergänge 17 der senderseitig dargestellten Bildfolge innerhalb der Bildaufnahmen 12. Die Bildaufnahme 11 in Szenario a) ist hingegen ausreichend phasensynchron, um bei der dargestellten Kombination aus Display und Kamera und der gewählten Belichtungszeit $t_{exp}$ eine fehlerfreie Bildaufnahme 11 zu gewährleisten. Figur 5 c) stellt den Fall dar, dass aufgrund der entgegengesetzten Orientierung der Zeilenscans von Display und Kamera keine Phasensynchronisation erreicht werden kann.

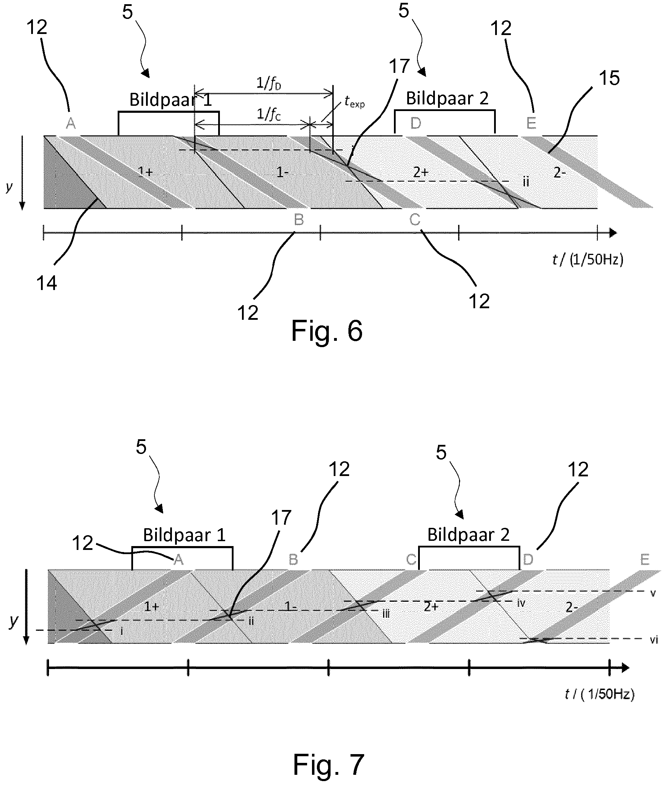

Die Figur 6 zeigt eine räumlich-zeitliche Modellierung einer Bildwiedergabe 10 gemäß einem ersten Ausführungsbeispiel der Erfindung und einer Bildaufnahme 11 für $f_C > f_D$. Die Aufgabe des Synchronisationsalgorithmus in diesem ersten Ausführungsbeispiel besteht darin, eine abschnittsweise Bildpaarzuordnung zu realisieren, bei der sich die Einzelbilder eines Bildpaares 5 in verschiedenen Bildaufnahmen 12 befinden können. Die Figur 6 veranschaulicht das Prinzip. Die Bildwiedergabe 10 des Displays geschieht in diesem Fall mit einer Bildwiedergaberate von $f_D$ = 50 Hz, wohingegen die Kamera mit fc = 60 Hz aufnimmt. Die Reaktionszeit des Displays sei vernachlässigbar kurz. Es werden innerhalb des dargestellten Abschnitts vier Einzelbilder vom Display angezeigt (1+,1-,2+,2-), mithilfe derer sich zwei Differenzbilder ((1+) - (1-), ((2+) - (2-)) erzeugen lassen. Die Einzelbildaufnahmen der Kamera 12 sind mit Großbuchstaben gekennzeichnet. Es ist zu erkennen, dass die oberen 20 % des ersten Differenzbildes im Optimalfall aus Bildaufnahme A und C erzeugt werden, wohingegen sich die unteren 80 % aus Aufnahme A und Aufnahme B zusammensetzen lassen (Trennlinie i). Zur Erzeugung des zweiten Differenzbildes kann als Subtrahend für das gesamte Differenzbild Aufnahme E verwendet werden, wobei als Minuend für die oberen 60 % Aufnahme D und für die unteren 40 % Aufnahme C gewählt werden sollte (Trennlinie ii).

Die Bildaufnahmerate $f_C$ und Belichtungszeit $t_{exp}$ der Kamera ist in dem in Figur 6 dargestellten Beispiel derart gewählt, dass sich an den Bildübergängen 17 innerhalb der Bildaufnahmen 12 genau ein Punkt auf der y-Achse ergibt, an dem ein Wechsel der Bildaufnahmen für die Differenzbilderzeugung sinnvoll ist (gestrichelte Trennlinien). Eine Erhöhung der Bildaufnahmerate $f_C$ der Kamera bei gleicher Belichtungszeit $t_{exp}$ oder eine Verringerung der Belichtungszeit $t_{exp}$ bei gleicher Bildaufnahmerate $f_C$ würde hingegen zu einem Übergangsbereich führen, in dem zwei gleichwertige Aufnahmen eines Display-Bildes existieren. Bei einer Verringerung der Bildaufnahmerate $f_C$ bei gleicher Belichtungszeit $t_{exp}$ oder einer Erhöhung der Belichtungszeit $t_{exp}$ bei Erhaltung der Bildaufnahmerate $f_C$ würde hingegen ein Übergangsbereich entstehen, in dem keine vollständige ISI-freie Aufnahme beider Einzelbilder vorhanden ist. Die in Figur 6 gewählte Bildaufnahmerate $f_C$ und Belichtungszeit $t_{exp}$ stellen bei der gegebenen Bildwiedergaberate $f_D$ folglich einen optimalen Arbeitspunkt dar, bei dem sich alle Bilder der dargestellten Bildfolge gerade vollständig rekonstruieren lassen. Aus den geometrischen Verhältnissen der räumlich-zeitlichen Modellierunglässt sich für diesen Arbeitspunkt eine mathematische Beziehung zwischen der verwendete Bildaufnahmerate fc, der Belichtungszeit $t_{exp}$ und der Bildwiedergaberate des Displays $f_D$ ableiten:

$$\frac{1}{f_D} - \frac{1}{f_C} \geq t_{exp} \qquad\qquad (1)$$

$$f_C \geq \left( \frac{1}{f_D} - t_{exp} \right)^{-1} \qquad\qquad (2)$$

Der Zusammenhang lässt sich wie folgt verwerten. Bei einer gegebenen Display-Bildwiedergaberate $f_D$ und einer für die Aufnahme gewünschten Belichtungsdauer $t_{exp}$ muss die Bildaufnahmerate $f_C$ mindestens so hoch wie der nach (3) berechnete Wert sein, damit eine vollständige ISI-freie Aufnahme jedes Einzelbildes im Empfänger vorhanden ist. Andersherum: Bei einer gegebenen Bildwiedergaberate $f_D$ und einer in der Empfängerkamera verfügbaren Bildaufnahmerate $f_C$ ($f_C > f_D$) darf die Belichtungsdauer $t_{exp}$ maximal der Differenz aus den Kehrwerten beider Frequenzen entsprechen (2). Die in dem Beispiel aus Figur 6 gewählte Belichtungsdauer $t_{exp}$ entspricht dem bei den gewählten Frequenzen ($f_D$ = 50 Hz, $f_C$ = 60 Hz) maximalen Wert von 3,34 ms. Der in (1) bzw. (2) dargestellte mathematische Zusammenhang und die daraus resultierenden Schlussfolgerungen sind ebenfalls gültig, wenn die Scanverhalten von Kamera und Display aufgrund einer inversen Ausrichtung gegenläufig sind, wobei hier die Anzahl an auftretenden Bildübergängen 17 höher ist. Figur 7 zeigt eine räumlich-zeitliche Modellierung einer Bildwiedergabe 10 gemäß einem ersten Ausführungsbeispiel der Erfindung und einer Bildaufnahme 11 für $f_C > f_D$ bei gegenläufigem Scanverhalten von Display und Kamera.

Die Gleichungen (3) und (4) erweitern die Beziehungen (1) und (2) um die für LCD-typische mittlere Display-Reaktionszeit $\overline{t_R}$, wodurch sich bei gleicher Bildaufnahmerate fc die verfügbare Belichtungszeit $t_{exp}$ um $\overline{t_R}$ verringert bzw. sich bei gleicher Belichtungszeit $t_{exp}$ die erforderliche Bildaufnahmerate fc der Kamera erhöht. Eine möglichst kurze Display-Reaktionszeit ist demnach vorteilhaft für das Verfahren.

$$t_{exp} \leq \frac{1}{f_D} - \frac{1}{f_C} - \overline{t_R} \tag{3}$$

$$f_C \geq \left( \frac{1}{f_D} - t_{exp} - \overline{t_R} \right)^{-1} \tag{4}$$

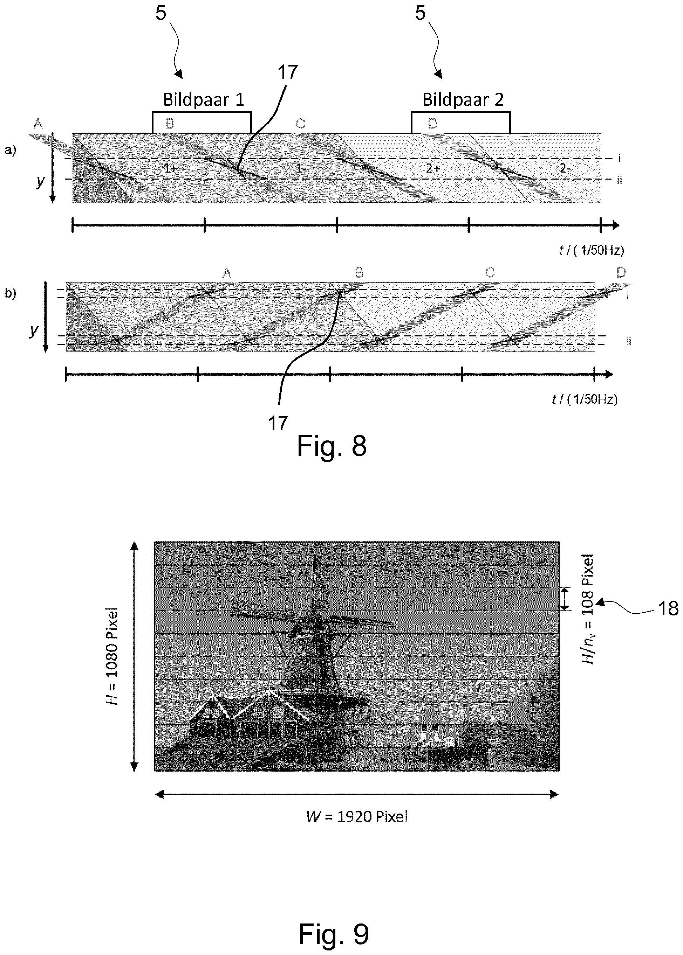

Figur 8 zeigt eine räumlich-zeitliche Modellierung einer Bildwiedergabe 10 gemäß einem ersten Ausführungsbeispiel der Erfindung und einer Bildaufnahme 11 für fc=fo, einmal mit gleicher Scanrichtung und einmal mit entgegengesetzter Scanrichtung des zeilenweisen Scanverhaltens von Display 14 und Kamera 15. In diesem Fall findet keine Überabtastung nach (2) bzw. (4) statt, was dazu führt, dass je nach relativer Aufnahmephase 13 Übergangsbereiche 17 entstehen können, welche in allen Bildaufnahmen 12 im gleichen vertikalen Bildbereich lokalisiert sind. Innerhalb dieser Bereiche findet genau wie bei den zuvor dargestellten Beispielen ein linearer Übergang 17 zwischen zwei Einzelbildern der Bildfolge statt. Ohne Überabtastung existieren im Empfänger jedoch keine ISI-freien Ersatzaufnahmen der Einzelbilder in den Übergangsbereichen 17. Innerhalb der Übergangsbereiche 17 gehen die zwei angrenzenden Einzelbilder linear ineinander über. In der Mitte der im Bild durch die Hilfslinien gezeichneten Übergangsbereiche 17 (auf Höhe des Kreuzpunkts der roten Linien) setzt sich die Bildaufnahmen 12 demnach exakt aus jeweils 50 % der angrenzenden Einzelbilder der Bildfolge 16 zusammen. In Aufnahme B und D führt dies in Figur 8 a) daher zu einer vollständigen Auslöschung des überlagerten pixelbezogenen Datenpakets an besagter Stelle, wohingegen in Aufnahme A und C eine Mischung der angrenzenden voneinander unabhängigen pixelbezogenen Datenpakete entsteht. Ohne eine geeignete Überabtastung durch die Kamera können daher Bildbereiche entstehen, in denen die Einzelbilder nicht vollständig vorhanden sind und dadurch die Differenzbilder nicht korrekt generiert werden können.

Um eine abschnittsweise Zuordnung der Bildaufnahmen 12 der Kamera vornehmen zu können, werden alle (entzerrten und örtlich synchronisierten) Bildaufnahmen 12 in vertikaler Richtung in $n_v$ (z. B. $n_v$ = 10) gleich große vertikale Bildabschnitte 18 unterteilt. Dies wird in Figur 9 gezeigt.

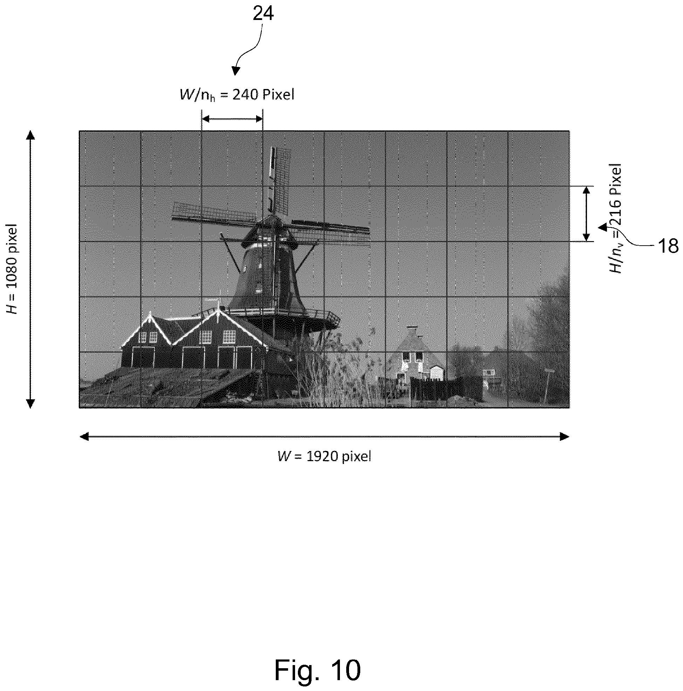

Figur 10 zeigt die zweidimensionale Unterteilung einer beispielhaften Full HD Bildaufnahme 12 in $n_v$ = 5 vertikale Bildabschnitte 18 und $n_h$ = 8 horizontale Bildabschnitte 24, welche in einem zweiten Ausführungsbeispiel der Erfindung Anwendung finden kann.

Es wird zunächst davon ausgegangen, dass das Hintergrundbildmaterial kein Video, sondern ein Standbild ist. Aufgabe des Algorithmus ist es, sukzessive alle möglichen Bildpaarzuordnungen innerhalb der Bildaufnahmen 12 zu finden und die Differenzbilder auf Basis der Zuordnungstabelle zusammenzusetzen. Hierzu werden für jeden vertikalen Bildabschnitt 18 alle in Fragen kommenden Differenzen erzeugt und ausgewertet. Es ist hierbei zunächst ausreichend, für die Auswertung nur einen modulierten Farbkanal heranzuziehen. Bei der Modulation der Farbdifferenzkanäle U und V des YUV-Farbraums könnte folglich der U- oder der V-Kanal verwendet werden. Die Auswertung besteht grundlegend darin, dass für jeden Abschnitt n alle für eine Zuordnung in Frage kommenden Differenzen des modulierten Farbkanals *modCh* erzeugt werden und jeweils der mittlere Betrag der Differenz-Pixelwerte $B_{sum,modCh}(k_X, k_Y, n)$ gebildet wird (6). Ein Größenvergleich von $B_{sum,modCh}(k_X, k_Y, n)$ für alle in Frage kommenden Kombinationen aus den Bildaufnahmen $k_X$ und $k_Y$ innerhalb eines Abschnitts n liefert die für diesen Abschnitt korrekte Zuordnung.

$$B_{sum,modCh}(k_X, k_Y, n) = \sum_{p=1}^{W} \sum_{q=(n-1) \cdot H + 1}^{n \cdot H} |r_{modCh}(p, q, k_X) - r_{modCh}(p, q, k_Y)| \tag{5}$$

Es gilt hierbei:

| $k_X$, $ky$ | Index Bildaufnahme Nr. X, $Y$ |
|---|---|
| $n$ | Laufindex der vertikalen Bildabschnitte 18, $n=1..n_v$ |
| $p$, q | Bildsensor-Pixelkoordinaten der Bildaufnahmen 12 |
| $W$, $H$ | Bildbreite $W$ und Bildhöhe $H$ der Bildaufnahmen 12 in Bildsensor-Pixelkoordinaten |
| modCh | Modulierter Farbkanal der Bildaufnahmen 12, wobei ein modulierter Farbkanal ein Farbkanal innerhalb eines Farbraums ist, welcher senderseitig für die pixelbezogene Aufmodulation der Datenfolge verwendet wurde |
| $r_{modCh}(p, q, lx)$ | Intensitätswert, wobei hiermit die Höhe der Amplitude der digitalen Repräsentation eines Bildes gemeint ist,des Farbkanals modCH an den Bildsensor-Koordinaten ($p$, $q$) in Bildaufnahme X |

Unter Vernachlässigung des nichtlinearen Wiedergabeverhaltens von Displays (Gammakurve) sowie unter der Annahme einer idealen Abbildung des Displays auf den Kamerasensor, können bei der Berechnung von $B_{sum,modCh}(k_X,k_Y,n)$ grundsätzlich drei mögliche Fälle eintreten (vgl. Tabelle 2).

Im ersten Fall enthalten die Bildaufnahmen $k_X$ und $k_Y$ innerhalb des vertikalen Bildabschnitts n Aufnahmen von zwei Einzelbildern, die zu einem Bildpaar 5 gehören. Es könnte sich beispielsweise um Abschnitte der Bilder der Bildfolge 16 mit den modulierten Daten +1 und -1 handeln. Durch die Differenzbildung ergeben sich in Abhängigkeit der Daten die gewünschten Amplituden 2A (logische "1") oder -2A (logische "0"). Der mittlere Betrag der Amplituden $B_{sum,modCh}(k_X, k_Y, n)$ beträgt folglich 2A.

Im zweiten Fall enthalten die Bildaufnahmen $kx$ und $k_Y$ innerhalb des vertikalen Bildabschnitts n Aufnahmen von zwei Einzelbildern, die voneinander unabhängige pixelbezogene Datenpakete enthalten (Beispiel: -1 und +2). Unter der Annahme gleichverteilter Datenbits löschen sich die Amplituden hier in der Hälfte der Fälle aus. Als Resultat entstehen die drei möglichen Differenzamplituden 2A, -2A und 0 mit den in Tabelle 2 aufgeführten Auftrittswahrscheinlichkeiten. Der mittlere Betrag der Amplituden $B_{sum,modCh}(k_X, k_Y, n)$ nimmt in diesem Fall den Wert A an und ist damit halb so groß wie in Fall 1.

Im dritten Fall enthalten die Bildaufnahmen $k_X$ und $k_Y$ innerhalb des vertikalen Bildabschnitts n Aufnahmen der gleichen Einzelbilder. Dieser Fall kann nur bei einer Überabtastung auftreten, wenn also die Bildaufnahmerate fc größer ist als die Bildwiedergaberate fo. Aufgrund des gleichen überlagerten pixelbezogenen Datenpakets und der damit verbundenen gleichen Aussteuerung in beiden Aufnahmen, wird das pixelbezogene Datenpaket bei der Differenzbildung ausgelöscht. Folglich ergibt sich: $B_{sum,modCh}(k_X, k_Y, n) = 0$.

Fall 1 entspricht einer korrekten Bildpaarzuordnung. Es kann zur Auswertung daher ein Größenvergleich von $B_{sum,modCh}(k_X, k_Y, n)$ für alle in Frage kommenden Differenzen innerhalb eines Abschnitts n durchgeführt werden, da von $B_{sum,modCh}(k_X, k_Y, n)$ in Fall 1 immer größer ist als in Fall 2 oder 3. Es ist zu beachten, dass aufgrund der Belichtungsdauer durch die Kamera nicht unbedingt genau einer der drei Fälle eintritt, sondern dass häufig Fall-Kombinationen innerhalb eines Abschnitts entstehen. Eine Überabtastung nach (3) führt jedoch dazu, dass Fall 1 für jede Bildzeile existiert.

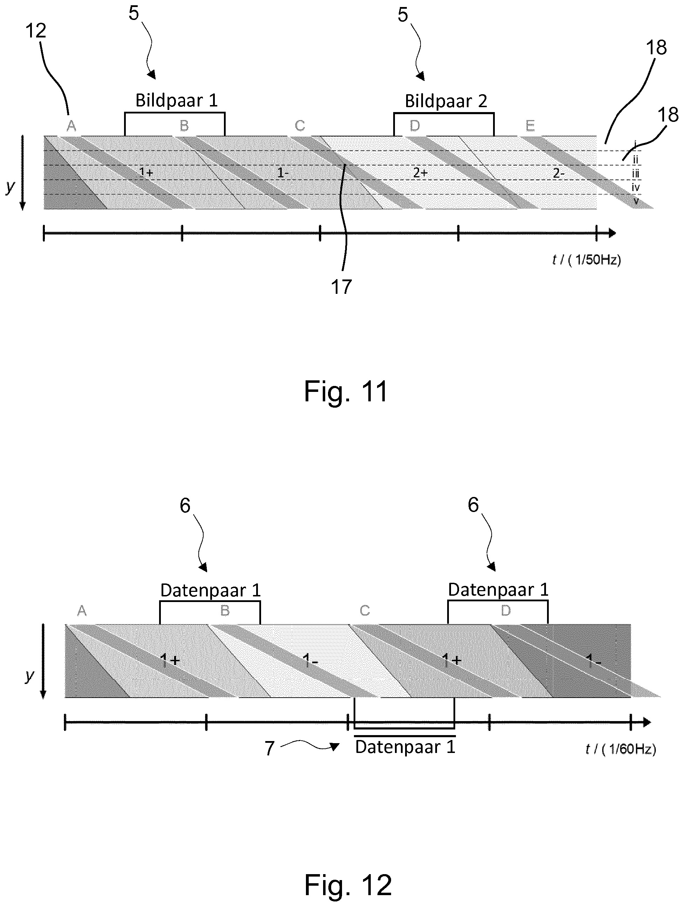

Ein beispielhafter Ablauf des auswertenden Algorithmus soll im Folgenden anhand eines Beispiels verdeutlicht werden. In Figur 11 ist hierzu erneut die aus Figur 6 bekannte räumlich-zeitliche Modellierung der Wiedergabe-Aufnahme-Kombination dargestellt, bei der eine Bildwiedergabe 10 mit $f_D$ = 50 Hz von einer Rolling-Shutter Kamera mit fc = 60 Bildern pro Sekunde aufgenommen wird. Die Einzelbildaufnahmen der Bildaufnahme 12 werden in dem dargestellten Beispiel der Darstellung wegen in nur $n_v$ = 5 vertikale Bildabschnitte 18 (i, ii, .. v) unterteilt. Es soll die Erzeugung des ersten Differenzbildes nachvollzogen werden, welches sich aus der Differenz der Bilder 1+ und 1- der Bildfolge erzeugen lässt.

Der Algorithmus führt die Bildpaarzuordnung abschnittsweise durch, wobei zu Beginn nicht die ersten, sondern die dritte oder vierte Bildaufnahme (hier Aufnahme C) als Referenz herangezogen wird. Aufgrund der möglichen Überabtastung ($f_C > f_D$) kommen für Bildaufnahme C sowohl die direkt benachbarten Bildaufnahmen B und D als auch die Bildaufnahmen A und E für die Differenzbilderzeugung in Frage. Im ersten Schritt wird demnach $B_{sum,modCh}(k_X, k_Y, n)$ für die Kombinationen $k_X/k_Y$ = A/C, B/C, C/D und C/E berechnet. Durch einen Größenvergleich gewinnt die Kombination A/C, da hier eine saubere Differenz gemäß Fall 1 aus erzeugt wird. C/D und C/E entsprechen genau Fall 2, wohingegen bei B/C eine Mischung aus Fall 1 und 3 vorliegt. Da Bildaufnahme B ebenfalls eine Bildaufnahme des Displaybilds 1- enthalten kann, wird der Gewinner A/C im nächsten Schritt mit der bisher nicht berücksichtigten Kombination A/B verglichen. In dem vorliegenden Fall lässt sich in Abschnitt i durch die Kombination A/C allerdings ein besseres Differenzbild erzeugen, weswegen diese Kombination in der Zuordnungstabelle (Tabelle 1) für n=1 gespeichert wird. In Abschnitt ii wird die gleiche Prozedur wiederholt, wobei hier im ersten Vergleich (A/C, B/C, C/D, C/E) ebenfalls die Kombination A/C die stärkste ist. Im zweiten Vergleich (A/C, A/B) gewinnt hingegen A/B, wie anhand von Figur 11 nachvollzogen werden kann. Aufgrund des finalen Ergebnisses A/B aus Abschnitt ii wird als neue Referenz-Bildaufnahme in Abschnitt 3 nicht Bildaufnahme C, sondern Bildaufnahme B verwendet. Ein Wechsel der Referenz-Bildaufnahme wird immer dann durchgeführt, wenn die bisherige Referenz- Bildaufnahme im vorherigen Abschnitt nicht Teil der finalen Zuordnung ist. Auf diese Weise wird einer phasenfalschen Zusammensetzung der Differenzbilder entgegengewirkt. Würde der Algorithmus in Abschnitt iii hingegen mit Bildaufnahme C fortgesetzt werden, würde in Abschnitt iii-v bereits das Differenzbild 2 erzeugt werden. Es werden in Abschnitt iii also die Kombinationen A/B, B/C und B/D untersucht, wobei in allen verbleibenden Abschnitten (iii-v) die Kombination A/B gewinnt. Das erste Differenzbild lässt sich also gemäß der Zuordnung in Tabelle 3 aus einer Kombination der Bildaufnahmen A, B und C erzeugen. Das zweite Differenzbild setzt sich aus den Bildaufnahmen C, D und E zusammen. Auf Basis der Zuordnungstabelle können im Anschluss die Differenzbilder in allen modulierten Farbkanäle erzeugt werden.

Tabelle 1: Abschnittsweise Zuordnung der Bildaufnahmen A bis E gemäß Figur 11

| n | 1 | 2 | 3 | 4 | 5 |
|---|---|---|---|---|---|
| **Differenzbild 1** | A-C | A-B | A-B | A-B | A-B |
| **Differenzbild 2** | D-E | D-E | D-E | C-E | C-E |

Der mittlere Betrag der Amplituden $B_{sum,modCh}(k_X, k_Y, n)$ eines modulierten Kanals eignet sich jedoch - wie beschrieben - nur als Vergleichskriterium, solange das modulierte Bildmaterial keine oder nur sehr geringfügige Bewegungen enthält. Dies liegt darin begründet, dass bei Bildinhaltsänderungen ein Differenzbild gemäß Fall 2 aus (Differenz aus unabhängigen pixelbezogenen Datenpaketen und ggf. abweichenden Bildinhalten) nicht nur die Nutzsignalamplituden (2A, -2A und 0) sondern auch Differenzamplituden durch Bildinhaltsänderungen enthält. In Fall 1 oder 3 tritt dies aufgrund der Bildinhaltswiederholung der zeitlich differentiellen Modulation nicht auf. Bei zu starker Bewegung kann der mittlere Betrag der Amplitude in Fall 2 durch die Bildinhaltsdifferenzen einen größeren Wert annehmen als der mittlere Betrag der Amplituden in Fall 1. Infolgedessen wird eine Fehlentscheidung getroffen, welche die korrekte Differenzbilderzeugung verhindert. Das Vergleichskriterium (5) muss also sinnvoll erweitert werden, sodass Bewegungen des Hintergrundvideos nicht berücksichtigt werden oder das Kriterium in diesem Fall durch einen Straf-Faktor ausreichend abgeschwächt wird. Hierbei hat sich insbesondere die Einbeziehung eines zweiten, nicht modulierten Farbkanals bewährt. Unter der Annahme, dass Bewegungen in natürlichen Bildsequenzen Korrelationen zwischen den Bildkanälen aufweisen, kann der Kehrwert des mittleren Betrags eines unmodulierten Farbkanals als Gewichtungsfaktor mit einbezogen werden, wodurch ein erweitertes Vergleichskriterium definiert werden kann:

$$B_{sum,erweitert}(k_X,k_Y,n) = \frac{B_{sum,modulierter\ Farbkanal}(k_X,k_Y,n)}{\sqrt{B_{sum,nicht\ modulierter\ Farbkanal}(k_X,k_Y,n)}} \qquad (6)$$

Es wird also davon ausgegangen, dass Bildinhalte mit Bewegungen in einem Farbkanal, z. B. in einem modulierten Farbkanal wie dem U- oder V-Kanal des YUV Farbraums, typischerweise auch Bewegungen in einem anderen Farbkanal, wie z. B. einem nicht modulierten Kanal, wie z. B. dem Y-Kanal des YUV-Farbraums aufweisen. Eine durch Bildinhaltsänderungen erhöhte mittlere Differenzamplitude in einem modulierten Farbkanal wird also mittels Division durch $\sqrt{B_{sum,nicht\ modulierter\ Farbkanal}(k_X,k_Y,n)}$ stark genug abgeschwächt, um eine Fehlentscheidung zu verhindern.

Figur 12 zeigt die räumlich-zeitliche Modellierung einer Bildwiedergabe 10 gemäß einem zweiten Ausführungsbeispiel der Erfindung und einer Bildaufnahme 11 für $f_C = f_D$. Gemäß dem zweiten Ausführungsbeispiel der Erfindung, wird lediglich ein pixelbezogenes Datenpaket pro moduliertem Farbkanal übertragen, was bedeutet, dass auch im Empfänger nur ein

Differenzbild pro Übertragungskanal erzeugt werden muss. Durch Aufnahme einer größeren Anzahl an Bildaufnahmen 12 (z. B. 20) durch die Kamera kann jedoch mehr als einmal dasbezüglich des überlagerten pixelbezogenen Datenpakets - gleiche Differenzbild erzeugt werden. Da das durch den Kamerasensor hinzugefügte Rauschen (hauptsächlich Schrotrauschen) zwischen verschiedenen Aufnahmen nicht korreliert, kann durch eine konstruktive Überlagerung der Einzel-Differenzbilder ein bezüglich des Signal-zu-Rausch-Verhältnisses verbessertes Differenzbild erzeugt werden.

Ähnlich wie bei einem ersten Ausführungsbeispiel der Erfindung wird auch bei einem zweiten Ausführungsbeispiel der Erfindung davon ausgegangen, dass die Bildaufnahmerate fc der Kamera ungefähr der Bildwiedergaberate $f_D$ des Displays entspricht. Hierbei ist es jedoch wie bei einem ersten Ausführungsbeispiel der Erfindung vorteilhaft, wenn beide Raten nicht identisch sind, sodass auftretende Bildinhaltsübergänge 17 in den Bildaufnahmen 12 nicht in jeder Aufnahme im gleichen vertikalen Bereich lokalisiert sind. Der Einfachheit halber wird zunächst - wie in Figur 12 dargestellt - davon ausgegangen, dass Bildaufnahme 11 und Bildwiedergabe 10 synchron verlaufen. Gemäß dem zweiten Ausführungsbeispiel der Erfindung wird jedem Einzelbild das gleiche pixelbezogene Datenpaket mit von Bild zu Bild alternierendem Vorzeichen überlagert.

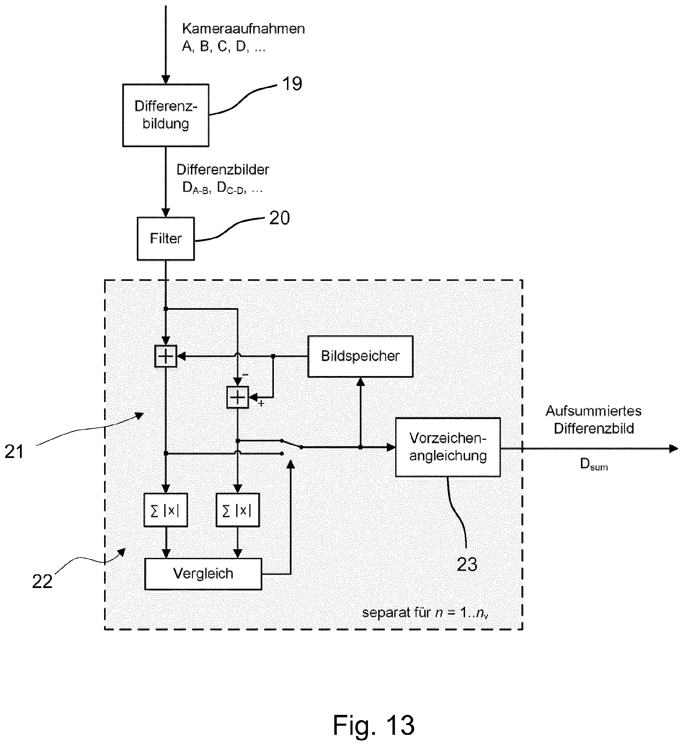

Figur 13 zeigt ein Signalflussdiagramm des Empfängers gemäß einem zweiten Ausführungsbeispiel der Erfindung und stellt einen beispielhaften Ablauf des Algorithmus zur Aufsummierung mehrerer Differenzbilder dar. Es werden zunächst alle Differenzbilder $D_{X-Y}$ aufeinanderfolgender Bildaufnahmen (X-Y = A-B, C-D, D-E, usw.) erzeugt 19. Die erzeugten Differenzbilder werden anschließend örtlich mit der Filtermatrix gefiltert 20. Das erste Differenzbild $D_{A-B}$ ist per Definition das Ausgangs-Differenzbild, wobei das Vorzeichen von $D_{A-B}$ unbekannt ist. Während durch die Differenzbildung aus +1 und -1 das korrekte Differenzbild erzeugt wird (richtiges Vorzeichen), führt die Differenzbildung aus -1 und +1 zum invertierten Differenzbild (falsches Vorzeichen). In dem in Figur 12 dargestellten Fall ist das Vorzeichen von $D_{A-B}$ korrekt. Wäre stattdessen $D_{B-C}$ das Ausgangs-Differenzbild, wäre das Vorzeichen falsch. Die folgenden Differenzbilder ($D_{B-C}$, $D_{C-D}$, usw.) werden zu $D_{A-B}$ sukzessive hinzugefügt. Um eine konstruktive Überlagerung und damit eine Verbesserung des Differenzbildes gewährleisten zu können, muss hierbei das Vorzeichen des aufzuaddierenden Differenzbildes mit dem Vorzeichen des Ausgangs-Differenzbildes übereinstimmen. Um das zu erreichen, wird das hinzuzufügende Differenzbild probeweise einmal addiert und einmal subtrahiert 21. Im Anschluss wird ermittelt, welche Operation zu einer Verstärkung des Differenzbildes geführt hat. Hierzu kann wieder der in Gleichung (6) definierte mittlere Betrag $B_{sum,modCh}(k_X, k_Y, n)$ als Vergleichskriterium 22 herangezogen werden, da dieser bei einer konstruktiven Überlagerung größer ist als bei einer destruktiven Überlagerung. Aufgrund des unbekannten Vorzeichens des Ausgangs-Differenzbildes $D_{A-B}$ ist auch das Vorzeichen des akkumulierten Differenzbildes $D_{akk}$ unbekannt. Es existieren demnach zwei mögliche Differenzbilder, was bei nachfolgenden Decoder-Schritten berücksichtigt werden muss.

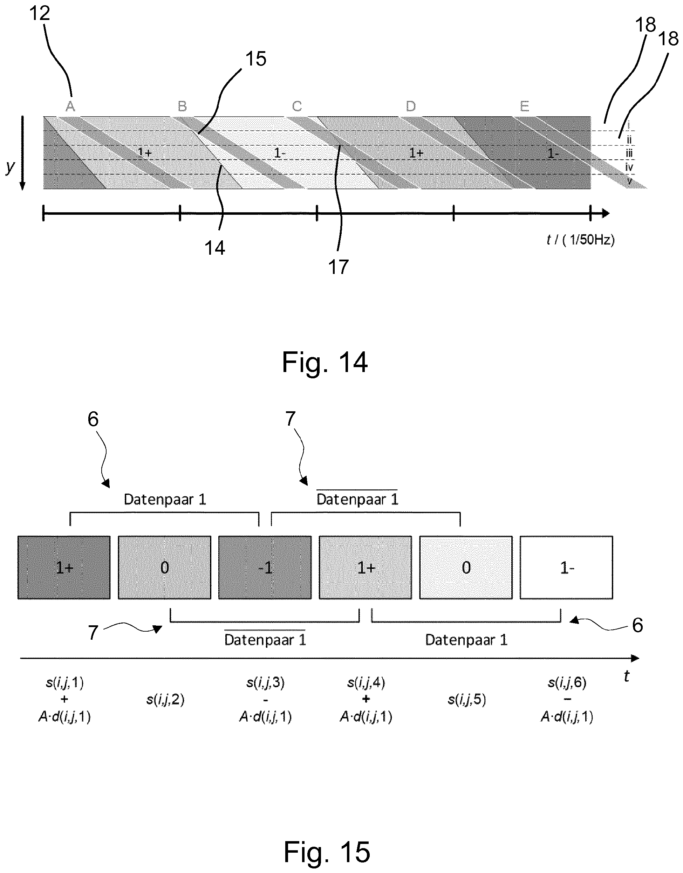

In dem in Figur 12 dargestellten Fall, indem die Bildaufnahmerate fc der Bildwiedergaberate entspricht, ist der Größenvergleich zur korrekten Akkumulation prinzipiell nicht notwendig, da das Vorzeichen von Differenzbild zu Differenzbild (A-B, B-C, usw.) alterniert. Unter Zulassung einer von der Bildwiedergaberate $f_D$ abweichenden Bildaufnahmerate fc wird der Vergleich jedoch benötigt, da der Vorzeichenwechsel in diesem Fall nicht vorhersehbar ist. Um beliebigen Wiedergabe- und Aufnahme-Timing Kombinationen mit Bildinhaltsübergängen 17 innerhalb der Bildaufnahmen 12 gerecht zu werden, wird der Aufsummierungsalgorithmus abschnittsweisem, d. h. separat für jeden Bildabschnitt, durchgeführt. Die Bildaufnahmen 12 werden hierbei in $n_V$ vertikale Bildabschnitte 18 unterteilt und separat verarbeitet. Dies ist in Figur 14 dargestellt. Alle Verarbeitungsschritte innerhalb des gestrichelten Rahmens in Figur 13 werden in diesem Fall separat für jeden vertikalen Bildabschnitt 18 n durchgeführt. Die initiale Erzeugung der Einzel-Differenzbilder und die anschließende Filterung können zuvor auf Basis der vollständigen Bildaufnahmen 12 durchgeführt werden. Die separate Durchführung der Aufsummierung führt jedoch dazu, dass durch Bildübergänge 17 in den Bildaufnahmen 12 die Vorzeichen der Abschnitte nicht konsistent sein müssen. Es kann bei fünf Abschnitten beispielsweise der Fall eintreten, dass das Vorzeichen in den ersten beiden Abschnitten richtig und in den restlichen drei Abschnitten falsch ist. Um dem entgegenzuwirken, werden die Vorzeichen der einzelnen Abschnitte anschließend angeglichen 23, wobei das resultierende gemeinsame Vorzeichen immer noch falsch sein kann. Nach der Vorzeichenangleichung existieren jedoch nur noch 2 anstelle von $2^{n_V}$ möglichen Differenzbildern.

Figur 15 zeigt eine alternative zeitliche Darstellungsabfolge der Modulation eines pixelbezogenen Datenpakets unter Verwendung der zeitlich differentiellen Modulation ohne Bildinhaltswiederholung gemäß einem weiteren Ausführungsbeispiel der Erfindung. Dieses alternative Modulationsschema kann z. B in dem Fall verwendet werden, indem die Bildaufnahmerate fc der Kamera ungefähr halb so groß ist wie die Bildwiedergaberate des Displays. Dies kann sinnvoll sein, wenn die modulierte Bildfolge mit z. B. 50 oder 60 Hz wiedergegeben wird (was die Sichtbarkeit des überlagerten pixelbezogenen Datenpakets im Vergleich zu einer Wiedergabe mit 25 oder 30 Hz reduziert), die Kamera aber bei der Bildaufnahme 11 mit $f_C$ = 25 Hz oder $f_C$ = 30 Hz eine höhere Bildqualität bietet, weil so eine Bildaufnahme ohne verlustbehaftete Quellencodierung/Kompression ermöglicht wird. Das Modulationsschema ist in Figur 15 dargestellt. Wie zu erkennen, sind hierbei jeweils drei aufeinanderfolgende Bilder nach folgendem Schema moduliert: Positive Datenmodulation, keine Datenmodulation, negative Datenmodulation. Dies führt dazu, dass im Mittel 2/3 der für eine Aufsummierung verwendeten Differenzbilder nur die halbe Nutzsignalamplitude aufweisen. Durch die deutlich reduzierte Sichtbarkeit des überlagerten pixelbezogenen Datenpakets sind jedoch größere Modulationsamplituden bei gleicher Sichtbarkeit möglich.

Die dieser Patentanmeldung zu Grunde liegende Erfindung entstand in einem Projekt, welches unter dem Förderkennzeichen D-11-42328-001-081061 / 03VP03900 vom BMBF gefördert wurde.

Bezugszeichenliste

| 1 | Sender |
| 2 | Empfänger |

| 3 | Pixel |
|---|---|
| 4 | Kamera |
| 5 | Bildpaar |
| 6 | Datenpaar |
| 7 | invertiertes Datenpaar |
| 8 | Bildübergang |
| 9 | vertikale Bildrichtung innerhalb der Bildaufnahmen |
| 10 | räumlich-zeitliche Modellierung der Bildwiedergabe |
| 11 | räumlich-zeitliche Modellierung der Bildaufnahme |
| 12 | Einzelbildaufnahme der Bildaufnahme |
| 13 | Aufnahmephase |
| 14 | zeilenweise zeitversetzte Aktualisierung des Bildinhalts |
| 15 | zeilenweise zeitversetzte Belichtung des Kamerasensors |
| 16 | Einzelbilder der Bildfolge |
| 17 | Bildübergang der senderseitig dargestellten Bildfolge innerhalb einer Kameraaufnahme |
| 18 | vertikaler Bildabschnitt |
| 19 | Differenzbilderzeugung aus jeweils zwei zeitlich aufeinanderfolgenden Bildaufnahmen der Kamera |
| 20 | örtliche Filterung mit Filtermatrix |
| 21 | additive Überlagerung des aufzusummierenden Differenzbildes probeweise mit positivem und negativem Vorzeichen |
| 22 | Vergleich der Summe der Beträge aller Intensitätswerte der Pixel beider probeweise erzeugten Differenzbilder |
| 23 | Vorzeichenangleichung der Bildabschnitte innerhalb des aufsummierten Differenzbildes |
| 24 | horizontaler Bildabschnitt |
| $s(i, j, m)$ | Bilddaten |
| $s_n(i, j)$ | Bildfolge |
| $d_n(i, j)$ | Datenfolge |
| $d(i, j, m)$ | pixelbezogene Datenpakete |
| $d(i, j, 2m)$ | erstes überlagertes pixelbezogenes Datenpaket |
| $d(i, j, 2m+1)$ | zweites überlagertes pixelbezogenes Datenpaket |
| $t_{Scan,C}$ | Zeitversatz zwischen dem Beginn der Belichtung der ersten Zeile und der letzten Zeile des Kamerasensors |
| $t_{Scan,D}$ | Zeitversatz zwischen der Aktualisierung der ersten Zeile und der letzten Zeile des Displays |
| $f_C$ | Bildaufnahmerate |
| $t_{exp}$ | Belichtungszeit |
| $f_D$ | Bildwiedergaberate |
| $\overline{t_R}$ | mittlere Reaktionszeit |
| L | Anzahl Datenbits |
| W | Bildbreite Bildaufnahmen in Bildsensor-Pixelkoordinaten |
| H | Bildhöhe der Bildaufnahmen in Bildsensor-Pixelkoordinaten |

**Patentansprüche**

1. Verfahren zur zeitlichen Synchronisation der optischen Übertragung von Daten im freien Raum von einem Sender (1) zu mindestens einem Empfänger (2),

wobei der Sender (1) eine bildgebende Vorrichtung mit einer Vielzahl an Pixeln (3) ist, die von Bilder repräsentierenden Bilddaten ($s(i, j, m)$) einer Bildfolge ($s_n(i, j)$) angesteuert werden und die zur Übertragung vorgesehenen Daten in eine Datenfolge ($d_n(i, j)$) aus einer eine Anzahl Datenbits umfassender Datenpakete aufgeteilt werden und jedes Datenbit mindestens einem der Pixel (3) zugeordnet wird, und dass die Datenpakete jeweils auf die Bilddaten ($s(i, j, m)$) mindestens eines Bildes der Bildfolge ($s_n(i, j)$) pixelbezogen in Form einer Amplitudenmodulation aufmoduliert werden,

wobei das Aufmodulieren der Bilddaten ($s(i, j, m)$) zeitlich differenziell erfolgt, die Bildfolge ($s_n(i, j)$) aus Bildpaaren (5) aufeinanderfolgender Bilder (16) gebildet wird und dass die Datenfolge ($d_n(i, j)$) aus pixelbezogenen Datenpaketen ($d(i, j, m)$) gebildet ist, von denen jedes zweite zu überlagernde pixelbezogene Datenpaket ($d(i, j, 2m+1)$) dem vorhergehenden ersten zu überlagernden pixelbezogenen Datenpaket ($d(i, j, 2m)$) mit umgekehrtem Vorzeichen entspricht, und dass jedes erste zu überlagernde pixelbezogene Datenpaket (d(i, j, 2m)) jedem ersten Bild eines Bildpaares (5) und jedes zweite pixelbezogene zu überlagernde Datenpaket (d(i, j, 2m + 1)) jedem zweiten Bild des Bildpaares (5) überlagert wird, und im Empfänger (2) zur Rückgewinnung der Datenfolge ($d_n(i, j)$) aus jedem Bildpaar (5) durch pixelweise Subtraktion des jeweils zweiten Bildes eines Bildpaars (5) vom ersten Bild des gleichen Bildpaars ein Differenzbild generiert wird,

der Empfänger (2) eine zur bildgebenden Vorrichtung beabstandet anzuordnende videoaufnahmefähige Kamera (4) umfasst, wobei die Kamera (4) die von der bildgebenden Vorrichtung (1) ausgesendete Bildfolge ($s_n(i, j)$) empfängt, **dadurch gekennzeichnet, dass**

eine beliebige zeitliche Aufnahmephase (13) für eine Bildaufnahme (12) durch die Kamera (4) zugelassen wird, wobei ein beliebiger Aufnahme-Startzeitpunkt für die Bildaufnahme (12) durch die Kamera (4) zugelassen wird,

eine beliebige Realisierung einer für die bildgebende Vorrichtung (1) typischen zeilenweise zeitversetzte Aktualisierung des Bildinhalts (14) erfolgt,

eine beliebige Realisierung eines Auslesetimings und damit zusammenhängenden Shuttertimings (15) der empfangenden Kamera (4) zugelassen wird und

eine Synchronisation nachträglich, auf Basis der zeitlich nicht synchronisiert aufgenommenen Bildaufnahmen (12), durchgeführt wird, wobei

die videoaufnahmefähige Kamera (4) für eine Bildaufnahme (12) der Kamera (4) eine Bildaufnahmerate $f_C$ und eine Belichtungszeit $t_{exp}$ besitzt, die bildgebende Vorrichtung (1) für eine Bildwiedergabe der bildgebenden Vorrichtung (1) eine Bildwiedergaberate $f_D$ und eine mittlere Reaktionszeit $\overline{t_R}$ besitzt und die Belichtungszeit $t_{exp}$ und die Bildaufnahmerate $f_C$ gemäß folgendem mathematischen Zusammenhang eingestellt werden:

$$t_{exp} \leq \frac{1}{f_D} - \frac{1}{f_C} - \overline{t_R}$$

$$f_C \geq \left( \frac{1}{f_D} - t_{exp} - \overline{t_R} \right)^{-1}$$

alle Bildaufnahmen (12) der Kamera (4) in vertikaler Bildrichtung (9) in $n_v$ gleich große Bildabschnitte (18) unterteilt werden, wobei die zeitliche Synchronisation zwischen der Bildwiedergabe (10) der bildgebenden Vorrichtung (1) und der Bildaufnahme (11) der Kamera (4) für jeden vertikalen Bildabschnitt (18) separat durchgeführt wird,

eine zeitliche Synchronisation zwischen der Bildwiedergabe (10) der bildgebenden Vorrichtung (1) und der Bildaufnahme (11) der Kamera (4) dadurch erzielt wird, dass im Empfänger (2) nach der Bildaufnahme (11) eine Rekonstruktion der senderseitigen Bildfolge ($s_n(i, j)$) auf Basis der Bildaufnahmen (12) durchgeführt wird, indem für jeden vertikalen Bildabschnitt (18) eine separate Zuordnung der Bildabschnitte innerhalb der Bildaufnahmen (12) der Kamera (4) zu den Einzelbildern (16) der senderseitigen Bildfolge ($s_n(i, j)$) durchgeführt wird,

die abschnittsweise Rekonstruktion der Bilder (16) der durch die bildgebende Vorrichtung (1) dargestellten Bildfolge ($s_n(i, j)$) auf Basis der Bildaufnahmen (12) im Empfänger (2) dadurch geschieht, dass bildabschnittsweise die Bildpaare (5) der senderseitigen Bildfolge ($s_n(i, j)$) innerhalb der Bildaufnahmen (12) gesucht werden, indem in jedem vertikalen Bildabschnitt (18) alle Differenzbildabschnitte aus allen potentiell für die Erzeugung eines Differenzbildabschnitts in Frage kommenden Paaren von Bildabschnitten aus den zeitlich aufeinanderfolgender Bildaufnahmen (12) erzeugt werden und miteinander verglichen werden, wobei der Differenzbildabschnitt, welcher ein bezüglich eines mittleren Signalpegels stärkstes, durch die Aufmodulation des pixelbezogenen Datenpakets (d(i, j, m)) entstehendes, Datensignal aufweist, innerhalb des jeweiligen vertikalen Bildabschnitts (18) für die anschließende Differenzbilderzeugung verwendet wird.

2. Verfahren nach Anspruch 1, **dadurch gekennzeichnet, dass**
ein Vergleichskriterium für den Vergleich der abschnittsweise erzeugten potentiellen Differenzbildabschnitte definiert wird, wobei hierfür die Summe der Beträge aller Pixelwerte $B_{sum}(k_X, k_Y, n)$ des jeweiligen Differenzbildabschnitts n, welcher aus den Bildaufnahmen $k_X$ und $k_Y$ durch pixelweise Subtraktion erzeugt wurde, nach folgender Formel verwendet wird:

$$B_{sum,modCh}(k_X, k_Y, n) = \sum_{p=1}^{W} \sum_{q=(n-1)\cdot H+1}^{n\cdot H} |r_{modCh}(p, q, k_X) - r_{modCh}(p, q, k_Y)|$$

Es gilt hierbei:

$k_X, k_Y$ Index Bildaufnahme Nr. X, Y
$n$ Laufindex der vertikalen Bildabschnitte, $n=1..n_v$
$p, q$ Bildsensor-Pixelkoordinaten der Bildaufnahmen
$W, H$ Bildbreite $W$ und Bildhöhe H der Bildaufnahmen (11) in Bildsensor-Pixelkoordinaten
$modCh$ Modulierter Farbkanal der Bildaufnahmen (11), wobei ein modulierter Farbkanal ein Farbkanal innerhalb eines Farbraums ist, welcher senderseitig für die pixelbezogene Aufmodulation der Datenfolge verwendet wurde
$r_{modCh}(p, q, I_X)$ Intensitätswert, wobei hiermit die Höhe der Amplitude der digitalen Repräsentation eines Bildes gemeint ist, des Farbkanals $modCH$ an den Bildsensor-Koordinaten $(p, q)$ in Bildaufnahme X

3. Verfahren nach Anspruch 2, **dadurch gekennzeichnet, dass**
ein erweitertes Vergleichskriterium definiert wird, bei dem $B_{sum}(k_X, k_Y, n)$ jeweils für einen modulierten Farbkanal und für einen nicht für die Datenmodulation verwendeten Farbkanal, also einen nicht modulierten Farbkanal, berechnet wird, wobei ein modulierter Farbkanal ein Farbkanal innerhalb eines Farbraums ist, welcher senderseitig für die pixelbezogene Aufmodulation der Datenfolge verwendet wurde, wobei das erweiterte Vergleichskriterium im Anschluss wie folgt berechnet wird:

$$B_{sum,erweitert}(k_X, k_Y, n) = \frac{B_{sum,modulierter\ Farbkanal}(k_X, k_Y, n)}{\sqrt{B_{sum,nicht\ modulierter\ Farbkanal}(k_X, k_Y, n)}}$$

4. Verfahren zur zeitlichen Synchronisation der optischen Übertragung von Daten im freien Raum von einem Sender (1) zu mindestens einem Empfänger (2),

wobei der Sender (1) eine bildgebende Vorrichtung mit einer Vielzahl an Pixeln (3) ist, die von Bilder repräsentierenden Bilddaten (s(i, j, m)) einer Bildfolge ($s_n$(i, j)) angesteuert werden und die zur Übertragung vorgesehenen Daten in eine Datenfolge ($d_n$(i, j)) aus einer eine Anzahl Datenbits umfassender Datenpakete aufgeteilt werden und jedes Datenbit mindestens einem der Pixel (3) zugeordnet wird, und dass die Datenpakete jeweils auf die Bilddaten (s(i, j, m)) mindestens eines Bildes der Bildfolge ($s_n$(i, j)) pixelbezogen in Form einer Amplitudenmodulation aufmoduliert werden,
wobei das Aufmodulieren der Bilddaten (s(i, j, m)) zeitlich differenziell erfolgt,
die Bildfolge ($s_n$(i, j)) aus Bildpaaren (5) aufeinanderfolgender Bilder (16) gebildet wird und dass die Datenfolge ($d_n$(i, j)) aus pixelbezogenen Datenpaketen (d(i, j, m)) gebildet ist, von denen jedes zweite zu überlagernde pixelbezogene Datenpaket (d(i, j, 2m+1)) dem vorhergehenden ersten zu überlagernden pixelbezogenen Datenpaket (d(i, j, 2m)) mit umgekehrtem Vorzeichen entspricht, und dass jedes erste zu überlagernde pixelbezogene Datenpaket (d(i, j, 2m)) jedem ersten Bild eines Bildpaares (5) und jedes zweite pixelbezogene zu überlagernde Datenpaket (d(i, j, 2m + 1)) jedem zweiten Bild des Bildpaares (5) überlagert wird, und im Empfänger (2) zur Rückgewinnung der Datenfolge ($d_n$(i, j)) aus jedem Bildpaar (5) durch pixelweise Subtraktion des jeweils zweiten Bildes eines Bildpaars (5) vom ersten Bild des gleichen Bildpaars ein Differenzbild generiert wird, der Empfänger (2) eine zur bildgebenden Vorrichtung beabstandet anzuordnende videoaufnahmefähige Kamera (4) umfasst, wobei die Kamera (4) die von der bildgebenden Vorrichtung (1) ausgesendete Bildfolge ($s_n$(i, j)) empfängt, **dadurch gekennzeichnet, dass**
eine beliebige zeitliche Aufnahmephase (13) für eine Bildaufnahme (12) durch die Kamera (4) zugelassen wird,
wobei ein beliebiger Aufnahme-Startzeitpunkt für die Bildaufnahme (12) durch die Kamera (4) zugelassen wird,
eine beliebige Realisierung einer für die bildgebende Vorrichtung (1) typischen zeilenweise zeitversetzte Aktualisierung des Bildinhalts (14) erfolgt,
eine beliebige Realisierung eines Auslesetimings und damit zusammenhängenden Shuttertimings (15) der empfangenden Kamera (4) zugelassen wird und
eine Synchronisation nachträglich, auf Basis der zeitlich nicht synchronisiert aufgenommenen Bildaufnahmen (12), durchgeführt wird, wobei
jedem Bildpaar (5) das gleiche pixelbezogene Datenpaket (d(i, j, 2m)) überlagert wird, wobeijeweils eine Gruppe von $bs$ x $bs$ Pixeln der bildgebenden Vorrichtung zu einem Datenblock zusammengefasst werden, welcher durch das gleiche Datenbit der Datenfolge $d_n(i, j)$ moduliert wird, wobei zusätzlich eine senderseitige örtliche Filterung (20) jedes pixelbezogenen Datenpakets $(d(i, j, m))$ mit folgender Filtermatrix durchgeführt wird:

$$\overset{\xleftrightarrow{bs}}{\begin{bmatrix} 1 & \cdots & 1 & -1 & \cdots & -1 \\ \vdots & \ddots & \vdots & \vdots & \ddots & \vdots \\ 1 & \cdots & 1 & -1 & \cdots & -1 \\ -1 & \cdots & -1 & 1 & \cdots & 1 \\ \vdots & \ddots & \vdots & \vdots & \ddots & \vdots \\ -1 & \cdots & -1 & 1 & \cdots & 1 \end{bmatrix}} \updownarrow bs$$

im Empfänger (2) aus der Menge an vorhandenen Bildaufnahmen (12) der Kamera (4) das bezüglich des überlagerten pixelbezogenen Datenpakets $(d(i, j, m))$ gleiche Differenzbild mehr als einmal erzeugt wird und die entstehenden bezüglich des pixelbezogenen Datenpakets $(d(i, j, m))$ gleichen Differenzbilder pixelweise aufsummiert werden, wodurch ein im Vergleich zu einem einzelnen Differenzbild ein verbessertes Signal-zu-Rausch-Verhältnis entsteht, wobei

jede Bildaufnahme (11) der Kamera (4) oder jedes der erzeugten Einzel-Differenzbilder im Empfänger (2) vor der Weiterverarbeitung einer örtlichen Filterung (20) mit der gleichen Filtermatrix unterzogen wird, mit der jedes pixelbezogene Datenpaket $(d(i, j, m))$ senderseitig örtlich gefiltert wurde, wobei

die erzeugten und örtlich gefilterten Differenzbilder vorzeichenrichtig aufsummiert werden, wobei ab dem zweiten erzeugten Differenzbild probeweise dem ersten Differenzbild, oder den bis zu diesem Zeitpunkt bereits aufsummierten vorherigen Differenzbildern, das jeweils neu aufzusummierende Differenzbild einmal mit positivem und einmal mit negativem pixelweisen Vorzeichen additiv überlagert (21) wird und im Anschluss in einem Vergleich der beiden probeweise aufsummierten Differenzbilder ermittelt wird, bei welchem Vorzeichen das im aufsummierten Differenzbild enthaltene, durch die senderseitige Aufmodulation des pixelbezogenen Datenpakets $(d(i, j, m))$ entstehende, Datensignal am stärksten ist.

5. Verfahren nach Anspruch 4, **dadurch gekennzeichnet, dass**
für den Vergleich der Stärke des in den probeweise mit positivem und negativem Vorzeichen aufsummierten Differenzbildern enthaltenen Datensignals, die Summe der Beträge der Intensitätswerte, wobei hiermit die Höhe der Amplitude der digitalen Repräsentation des aufsummierten Differenzbildes gemeint ist, aller Pixel der jeweils resultierenden Differenzbilder miteinander verglichen werden (22).

6. Verfahren nach Anspruch 5, **dadurch gekennzeichnet, dass**
jede Bildaufnahme (12) der Kamera (4) oderjedes der erzeugten Differenzbilder im Empfänger (2) in $n_v$ gleich große vertikale Bildabschnitte (18) unterteilt wird, wobei die vorzeichenrichtige Aufsummierung der erzeugten Differenzbilder für jeden vertikalen Bildabschnitt (18) separat durchgeführt wird.

**Claims**

1. Method for the time synchronisation of the optical transmission of data in free space from a transmitter (1) to at least one receiver (2),

the transmitter (1) being an imaging device having a large number of pixels (3), which are actuated by image data $(s(i, j, m))$ from an image sequence $(s_n(i, j))$ that represent images and are divided up into a data sequence $(d_n(i, j))$ from a number of data packets containing data bits for transferring provided data, and each data bit is assigned to at least one of the pixels (3), and the data packets are each modulated to the image data $(s(i, j, m))$ of at least one image from the image sequence $(s_n(i, j))$ in a pixel-based manner in the form of amplitude modulation,

the image data $(s(i, j, m))$ being modulated in a time-differential manner, the image sequence $(s_n(i, j))$ being formed from image pairs (5) of successive images (16) and the data sequence $(d_n(i, j))$ being formed from pixel-based data packets $(d(i, j, m))$, of which each second pixel-based data packet $(d(i, j, 2m+1))$ to be superimposed corresponds to the preceding first pixel-based data packet (d(i, j, 2m)) to be superimposed with a reversed sign, and each first pixel-based data packet (d(i, j, 2m)) to be superimposed being superimposed on each first image of an image pair (5) and each second pixel-based data packet (d(i, j, 2m + 1)) to be superimposed being superimposed on each second image of the image pair (5), and a difference image being generated in the receiver (2) for recovering the data sequence (d$_n$(i, j)) from each image pair (5) by pixel-wise subtraction of the relevant second image of an image pair (5) from the first image of the same image pair,

the receiver (2) comprises a video-recording-capable camera (4) to be arranged at a distance from the imaging device, the camera (4) receiving the image sequence (s$_n$(i, j)) transmitted by the imaging device (1), **characterised in that**

any recording time phase (13) is permitted for image recording (12) by the camera (4), with any recording starting point being permitted for the image recording (12) by the camera (4),

any typically line-wise, time-delayed update of the image content (14) for the imaging device (1) is performed, any implementation of a read-out timing and of an associated shutter timing (15) of the receiving camera (4) is permitted and

synchronisation is carried out subsequently, on the basis of the image recordings (12) that have been recorded in a non-time-synchronised manner,

the video-recording-capable camera (4) having an image-recording rate fc and an exposure time $t_{\text{exp}}$ for an image recording (12) of the camera (4), the imaging device (1) having an image-reproduction rate $f_D$ and an average reaction time $\overline{t_R}$ for image reproduction by the imaging device (1) and the exposure time $t_{\text{exp}}$ and the image-recording rate $f_C$ being set in accordance with the following mathematical relationship:

$$t_{\text{exp}} \leq \frac{1}{f_D} - \frac{1}{f_C} - \overline{t_R}$$

$$f_C \geq \left(\frac{1}{f_D} - t_{\text{exp}} - \overline{t_R}\right)^{-1}$$

all the image recordings (12) by the camera (4) are divided in a vertical image direction (9) into $n_v$ equal-sized image portions (18), the time synchronisation between the image reproduction (10) by the imaging device (1) and the image recording (11) by the camera (4) being carried out separately for each vertical image portion (18), time synchronisation between the image reproduction (10) by the imaging device (1) and the image recording (11) by the camera (4) is achieved **in that** the transmitter-side image sequence (s$_n$(i, j)) is reconstructed on the basis of the image recordings (12) in the receiver (2) after image recording (11) by the image portions within the image recordings (12) by the camera (4) being separately assigned to the individual images (16) in the transmitter-side image sequence (s$_n$(i, j)) for each vertical image portion (18),

the images (16) in the image sequence (s$_n$(i, j)) displayed by the imaging device (1) are reconstructed in portions on the basis of the image recordings (12) in the receiver (2) **in that** the image pairs (5) in the transmitter-side image sequence (s$_n$(i, j)) are sought within the image recordings (12) in image portions by all the difference-image portions from all the pairs of image portions from the successive image recordings (12) that are potentially possible for generating a difference-image portion being generated in each vertical image portion (18) and compared with one another, with the difference-image portion that has the strongest data signal resulting from the modulation of the pixel-based data packet (d(i, j, m)) in relation to an average signal level being used within the relevant vertical image portion (18) for the subsequent difference-image generation.

2. Method according to claim 1, **characterised in that**
a comparison criterion is defined for the comparison of the potential difference-image portions generated in portions, with the sum of the amount of all the pixel values $B_{sum}(k_x, ky, n)$ of the relevant difference-image portion n which was generated from the image recordings $k_x$ and ky by pixel-wise subtraction being used for this purpose in accordance with the following formula:

$$B_{sum,modCh}(k_X, k_Y, n) = \sum_{p=1}^{W} \sum_{q=(n-1)\cdot H+1}^{n\cdot H} |r_{modCh}(p, q, k_X) - r_{modCh}(p, q, k_Y)|$$

The following applies here:

$k_X$, $k_Y$ Index of image recording no. *X, Y*

*n* Running index of the vertical image portions, $n=1...n_v$

*p, q* Image-sensor pixel coordinates of the image recordings

*W, H* Image width *W* and image height *H* of the image recordings (11) in image-sensor pixel coordinates

*modCh* Modulated colour channel of the image recordings (11), with a modulated colour channel being a colour channel within a colour space which has been used on the transmitter side for the pixel-based modulation of the data sequence

$r_{modCh}$(p, q, $l_X$) Intensity value (this meaning the level of the amplitude of the digital representation of an image) of the colour channel *modCH* at the image-sensor coordinates *(p, q)* in image recording *X*

3. Method according to claim 2, **characterised in that**
an enhanced comparison criterion is defined in which $B_{sum}(k_x, k_Y > n)$ is calculated in each case for a modulated colour channel and a colour channel not used for the data modulation, i.e. a non-modulated colour channel, with a modulated colour channel being a colour channel within a colour space which has been used on the transmitter side for the pixel-based modulation of the data sequence, with the enhanced comparison criterion then being calculated as follows:

$$B_{sum,enhanced}(k_X, k_Y, n) = \frac{B_{sum,modulated\ colour\ channel}(k_X, k_Y, n)}{\sqrt{B_{sum,non-modulated\ colour\ channel}(k_X, k_Y, n)}}$$

4. Method for the time synchronisation of the optical transmission of data in free space from a transmitter (1) to at least one receiver (2),

the transmitter (1) being an imaging device having a large number of pixels (3), which are actuated by image data (s(i, j, m)) from an image sequence ($s_n$(i, j)) that represent images and are divided up into a data sequence ($d_n$(i, j)) from a number of data packets containing data bits for transferring provided data, and each data bit is assigned to at least one of the pixels (3), and the data packets are each modulated to the image data (s(i, j, m)) of at least one image from the image sequence ($s_n$(i, j)) in a pixel-based manner in the form of amplitude modulation,

the image data (s(i, j, m)) being modulated in a time-differential manner,

the image sequence ($s_n$(i, j)) being formed from image pairs (5) of successive images (16) and the data sequence ($d_n$(i, j)) being formed from pixel-based data packets (d(i, j, m)), of which each second pixel-based data packet (d(i, j, 2m+1)) to be superimposed corresponds to the preceding first pixel-based data packet (d(i, j, 2m)) to be superimposed with a reversed sign, and each first pixel-based data packet (d(i, j, 2m)) to be superimposed being superimposed on each first image of an image pair (5) and each second pixel-based data packet (d(i, j, 2m + 1)) to be superimposed being superimposed on each second image of the image pair (5), and a difference image being generated in the receiver (2) for recovering the data sequence ($d_n$(i, j)) from each image pair (5) by pixel-wise subtraction of the relevant second image of an image pair (5) from the first image of the same image pair,

the receiver (2) comprises a video-recording-capable camera (4) to be arranged at a distance from the imaging device, the camera (4) receiving the image sequence ($s_n$(i, j)) transmitted by the imaging device (1), **characterised in that**

any recording time phase (13) is permitted for image recording (12) by the camera (4), with any recording starting point being permitted for the image recording (12) by the camera (4),

any typically line-wise, time-delayed update of the image content (14) for the imaging device (1) is performed,

any implementation of a read-out timing and of an associated shutter timing (15) of the receiving camera (4) is permitted and

synchronisation is carried out subsequently, on the basis of the image recordings (12) that have been recorded in a non-time-synchronised manner,

the same pixel-based data packet (d(i, j, 2m)) is superimposed on each image pair (5), each group of *bs x bs* pixels of the imaging device being combined into a data block which is modulated by the same data bit from the data sequence $d_n$(i, j), transmitter-side local filtering (20) of each pixel-based data packet (d(i, j, m)) being additionally carried out using the following filter matrix:

$$\begin{bmatrix} 1 & \cdots & 1 & -1 & \cdots & -1 \\ \vdots & \ddots & \vdots & \vdots & \ddots & \vdots \\ 1 & \cdots & 1 & -1 & \cdots & -1 \\ -1 & \cdots & -1 & 1 & \cdots & 1 \\ \vdots & \ddots & \vdots & \vdots & \ddots & \vdots \\ -1 & \cdots & -1 & 1 & \cdots & 1 \end{bmatrix}$$

the difference image, which is identical to the superimposed pixel-based data packet (d(i, j, m)), is generated more than once in the receiver (2) from the quantity of available image recordings (12) from the camera (4) and the resulting difference images, which are identical to the pixel-based data packet (d(i, j, m)), are summed in a pixel-wise manner, resulting in an improved signal-to-noise ratio compared with an individual difference image, each image recording (11) by the camera (4) or each of the generated individual difference images are subjected to local filtering (20) in the receiver (2) before further processing using the same filter matrix as that with which each pixel-based data packet (d(i, j, m)) was locally filtered on the transmitter side,

the generated and locally filtered difference images being summed with the correct sign, and, from the second generated difference image, the difference image to be newly summed in each case is additively superimposed (21) as a trial on the first difference image or the preceding difference images already summed at this point, once with a positive and once with a negative pixel-wise sign, and it is then determined in a comparison of the two difference images summed as a trial with which sign the data signal contained in the summed difference image and resulting from the transmitter-side modulation of the pixel-based data packet (d(i, j, m)) is strongest.

5. Method according to claim 4, **characterised in that**
for the comparison of the strength of the data signal contained in the summed difference images as a trial with a positive and negative sign, the sums of the amounts of the intensity values (this meaning the level of the amplitude of the digital representation of the summed difference image) of all the pixels of the difference images resulting in each case are compared (22) with one another.

6. Method according to claim 5, **characterised in that**
each image recording (12) by the camera (4) or each of the generated difference images are divided into $n_v$ equal-sized vertical image portions (18) in the receiver (2), the correct-sign summation of the generated difference images being carried out separately for each vertical image portion (18).

**Revendications**

1. Procédé de synchronisation temporelle de la transmission optique de données en espace libre à partir d'un émetteur (1) vers au moins un récepteur (2),

dans lequel l'émetteur (1) est un dispositif délivrant des images avec une multiplicité de pixels (3) qui sont générés par des données d'images (s(i,j,m)) d'une suite d'images ($s_n$(i,j)) représentant des images et qui sont subdivisées en paquets de données comprenant un nombre de bits de données pour la transmission des données prévues dans une suite de données ($d_n$(i,j)), et chaque bit de donnée est associé à au moins un des pixels (3), et que les paquets de données sont modulés, respectivement en ce qui concerne les pixels, pour les données d'images (s(i,j,m)) d'au moins une image de la suite d'images ($s_n$(i,j)) sous la forme d'une modulation en amplitude,

dans lequel la modulation des données d'images (s(i,j,m)) a lieu de manière différenciée dans le temps,

la suite d'images ($s_n$(i,j)) est formée de paires d'images (5) d'images (16) se succédant et que la suite de données ($d_n$(i,j)) est formée de paquets de données (d(i,j,m)) en ce qui concerne les pixels, parmi lesquels chaque deuxième paquet de données (d(i,j, 2m +1)) en ce qui concerne les pixels à superposer correspond au premier paquet de données (d(i,j, 2m) en ce qui concerne les pixels à superposer précédent avec un signe algébrique inversé, et que chaque premier paquet de données (d(i,j, 2m) en ce qui concerne les pixels à superposer est superposé à chaque première image d'une paire d'images (5), et chaque deuxième paquet de données (d(i,j,2m + 1)) en ce qui concerne les pixels à superposer est superposé à chaque deuxième image de la paire d'images (5), et une image de différence est générée dans le récepteur (2) à partir de chaque paire d'images (5) par une soustraction pixel par pixel respectivement de la deuxième image d'une paire d'images (5) de la première image de la même paire d'images pour la restitution de la suite de données (dn(i,j)),

le récepteur (2) comprend une caméra (4) capable d'enregistrer en vidéo devant être disposée espacée par rapport au dispositif délivrant des images, où la caméra (4) reçoit la suite d'images ($s_n(i,j)$) envoyée par le dispositif délivrant des images, **caractérisé en ce**

**qu'**une phase de prise de vue (13) temporelle quelconque pour une prise de vue d'image (12) est permise par la caméra (4), où un instant de départ de la prise de vue quelconque est permis pour la prise de vue de l'image (12) par la caméra (4),

une réalisation quelconque d'une actualisation du contenu d'image (14) typique ligne par ligne décalée dans le temps a lieu pour le dispositif (1) délivrant les images,

une réalisation quelconque d'un cadencement de lecture, et par conséquent d'un cadencement d'obturation (15) associé, de la caméra (4) réceptrice est effectuée, et

une synchronisation est effectuée rétroactivement sur la base des prises de vues d'images (12) faites dans le temps de manière non synchronisée, où

la caméra (4) capable d'enregistrer en vidéo, pour une prise de vue d'image (12) de la caméra (4), possède une vitesse de prise de vues d'images fc et une durée d'exposition $t_{exp}$, le dispositif (1) délivrant des images possède, pour une restitution d'images du dispositif (1) délivrant des images, une vitesse de restitution d'image $f_D$ et un temps de réaction moyen $\overline{t_R}$ et la durée d'exposition $t_{exp}$ et la vitesse de prise de vue d'image fc sont réglées selon la relation mathématique suivante :

$$t_{exp} \leq \frac{1}{f_D} - \frac{1}{f_C} - \overline{t_R}$$

$$f_C \geq \left(\frac{1}{f_D} - t_{exp} - \overline{t_R}\right)^{-1}$$

toutes les prises de vues d'images (12) de la caméra (4) sont subdivisées en $n_v$ segments d'image (18) de même dimension dans la direction d'image verticale (9), où la synchronisation temporelle de la restitution d'image (10) du dispositif (1) délivrant des images et la prise de vue d'image (11) de la caméra (4) sont effectuées séparément pour chaque segment d'image vertical (18),

une synchronisation temporelle entre la restitution d'image (10) du dispositif (1) délivrant des images et la prise de vue d'image (11) de la caméra (4) est réalisée en ce qu'une reconstruction de la suite d'images ($s_n(i,j)$) du côté émetteur est effectuée dans le récepteur (2) après la prise de vue d'image (11) sur la base des prises de vues d'images (12), en ce qu'une association séparée des segments d'image dans les prises de vues d'images (12) de la caméra (4) avec les images individuelles (16) de la suite d'images ($s_n(i,j)$) côté émetteur est effectuée pour chaque segment d'image vertical (18),

la reconstruction segment par segment des images (16) de la suite d'images ($s_n(i,j)$) représentée par le dispositif (1) délivrant des images sur la base des prises de vues d'images (12) a lieu dans le récepteur (2) en ce que les paires d'images (5) de la suite d'images ($s_n(i,j)$) côté émetteur sont cherchées segment par segment dans les prises de vues d'images (12), en ce que, dans chaque segment d'image vertical (18), tous les segments d'image de différence sont créés à partir de toutes les paires de segments d'images entrant potentiellement en question pour la création d'un segment d'image de différence à partir de prises de vues d'images (12) se succédant dans le temps et sont comparés les uns aux autres, où le segment d'image de différence, lequel présente un signal de donnée le plus fort en ce qui concerne un niveau de signal moyen, engendré par la modulation du paquet de données (d(i,j,m) par rapport aux pixels, est employé dans le segment d'image vertical (18) respectif pour la création de l'image de différence ultérieure.

**2.** Procédé selon la revendication 1, **caractérisé en ce qu'**un critère de comparaison est défini pour la comparaison des segments d'image de différence potentiels créés segment par segment, où, à cette fin, la somme des contributions de toutes les valeurs de pixels $B_{sum}(k_x,k_y,n)$ du segment d'image de différence respectif n, lequel a été créé à partir des prises de vue d'images $k_x$ et $k_y$ par une soustraction pixel par pixel, est employée selon la formule suivante :

$$B_{sum,modCh}(k_X, k_Y, n) = \sum_{p=1}^{W} \sum_{q=(n-1)\cdot H+1}^{n\cdot H} |r_{modCh}(p, q, k_X) - r_{modCh}(p, q, k_Y)|$$

dans ce cas, on a :

> $k_x$, $k_y$ Signe algébrique de la prise de vue d'image N° X, Y
> $n$ Signe algébrique de déroulement des segments d'images verticaux, n = *1..n_v*
> p, q Coordonnées de pixels de capteur d'image des prises de vues d'images
> *W, H* Largeur d'image *W* et hauteur d'image *H* des prises de vues d'images (11) en coordonnées de pixels de capteur d'image
> *modCh* Canal de couleur modulé des prises de vues d'images (11), où un canal de couleur modulé est un canal de couleur dans un espace de couleur, lequel a été employé du côté émetteur pour la modulation par pixel de la suite de données
> $r_{modch}$(p,q,lx) Valeur d'intensité, où dans ce cas, il s'agit de la hauteur de l'amplitude de la représentation numérique d'une image, du canal de couleur *modCh* aux coordonnées *(p,q)* de capteur d'image dans la prise de vue d'image *X*

3. Procédé selon la revendication 2, **caractérisé en ce**
   **qu'**un critère de comparaison élargi est défini, chez lequel $B_{sum}(k_x, k_y, n)$ est calculée respectivement pour un canal de couleur modulé et un canal de couleur non employé pour la modulation de données, donc un canal de couleur non modulé, où un canal de couleur modulé est un canal de couleur dans un espace de couleur, lequel a été employé du côté émetteur pour la modulation relative aux pixels de la suite de données, où le critère de comparaison élargi est à la fin calculé de la manière suivante :

$$B_{,sum,élargi}(k_X, k_Y, n) = \frac{B_{sum,canal\ de\ couleur\ modulé}(k_X, k_Y, n)}{\sqrt{B_{sum,non-modulated\ colour\ channel}(k_X, k_Y, n)}}$$

4. Procédé de synchronisation temporelle de la transmission optique de données en espace libre à partir d'un émetteur (1) vers au moins un récepteur (2),

   > dans lequel l'émetteur (1) est un dispositif délivrant des images avec une multiplicité de pixels (3) qui sont générés par des données d'images (s(i,j,m)) d'une suite d'images ($s_n$(i,j)) représentant des images et qui sont subdivisés en paquets de données comprenant un nombre de bits de données pour la transmission des données prévues dans une suite de données ($d_n$(i,j)), et chaque bit de donnée est associé à au moins un des pixels (3), et que les paquets de données sont modulés respectivement en ce qui concerne les pixels pour les données d'images (s(i,j,m)) d'au moins une image de la suite d'images ($s_n$(i,j)) sous la forme d'une modulation en amplitude,
   > dans lequel la modulation des données d'images (s(i,j,m)) a lieu de manière différenciée dans le temps,
   > la suite d'images ($s_n$(i,j)) est formée de paires d'images (5) d'images (16) se succédant et que la suite de données ($d_n$(i,j)) est formée de paquets de données (d(i,j,m)) en ce qui concerne les pixels, parmi lesquels chaque deuxième paquet de données (d(i,j,2m +1))en ce qui concerne les pixels à superposer correspond au premier paquet de données (d(i,j,2m) en ce qui concerne les pixels à superposer précédent avec un signe algébrique inversé, et que chaque premier paquet de données (d(i,j, 2m) en ce qui concerne les pixels à superposer est superposé à chaque première image d'une paire d'images (5) et chaque deuxième paquet de données (d(i,j,2m + 1)) en ce qui concerne les pixels à superposer est superposé à chaque deuxième image de la paire d'images (5), et une image de différence est générée dans le récepteur (2) à partir de chaque paire d'images (5) par une soustraction pixel par pixel respectivement de la deuxième image d'une paire d'images (5) de la première image de la même paire d'images pour la restitution de la suite de données ($d_n$(i,j)),
   > le récepteur (2) comprend une caméra (4) capable d'enregistrer en vidéo devant être disposée espacée par rapport au dispositif délivrant des images, où la caméra (4) reçoit la suite d'images ($s_n$(i,j)) envoyée par le dispositif (1) délivrant des images, **caractérisé en ce**
   > **qu'**une phase de prise de vue (13) temporelle quelconque pour une prise de vue d'image (12) est permise par la caméra (4), où un instant de départ de la prise de vue quelconque est permis pour la prise de vue de l'image (12) par la caméra (4),

une réalisation quelconque d'une actualisation du contenu d'image (14) typique ligne par ligne décalée dans le temps a lieu pour le dispositif (1) délivrant les images,

une réalisation quelconque d'un cadencement de lecture, et par conséquent d'un cadencement d'obturation (15) associé, de la caméra (4) réceptrice est permise, et

une synchronisation est effectuée rétroactivement sur la base des prises de vus d'images (12) faites dans le temps de manière non synchronisée, où

à chaque paire d'images (5), est superposé le même paquet de données (d(i,j,2m) en ce qui concerne les pixels, où, respectivement, un groupe de $bs \times bs$ pixels du dispositif délivrant des images est regroupé en un bloc de données, lequel est modulé par le même bit de donnée de la suite de données $d_n(i,j)$, où, en outre, un filtrage local (20) du côté émetteur de chaque paquet de données (d(i,j,m)) en ce qui concerne les pixels est effectué avec la matrice de filtrage suivante :

$$
\overset{\xleftarrow{\hspace{2cm} bs \hspace{2cm}}}{
\begin{bmatrix}
1 & \dots & 1 & -1 & \dots & -1 \\
\vdots & \ddots & \vdots & \vdots & \ddots & \vdots \\
1 & \cdots & 1 & -1 & \cdots & -1 \\
-1 & \dots & -1 & 1 & \dots & 1 \\
\vdots & \ddots & \vdots & \vdots & \ddots & \vdots \\
-1 & \cdots & -1 & 1 & \cdots & 1
\end{bmatrix}} \updownarrow bs
$$

la même image de différence relative au paquet de données (d(i,j,m)) en ce qui concerne les pixels superposés est créée plus d'une fois dans le récepteur (2) à partir de la quantité de prises de vues d'images (12) présentes de la caméra (4) et les mêmes images de différence générées relatives au paquet de pixels (d(i,j,m)) en ce qui concerne les pixels sont sommées pixel par pixel, ce par quoi un rapport signal sur bruit amélioré est créé comparativement à une image de différence individuelle, où

chaque prise de vue d'image (11) de la caméra (4), ou chacune des images de différence individuelles créée, est soumise, avant le traitement ultérieur, dans le récepteur (2), à un filtrage local (20) avec la même matrice de filtrage avec laquelle chaque paquet de données (d(i,j,m)) en ce qui concerne les pixels a été filtré localement du côté émetteur, où

les images de différence créées et filtrées localement sont sommées en tenant compte du signe algébrique, où, à partir de la deuxième image de différence créée, à titre d'essai, la nouvelle image de différence respective sommée est superposée (21) de manière additive avec une fois un signe algébrique positif et une fois avec un signe négatif, pixel par pixel, à la première image de différence, ou aux images de différence précédentes déjà sommées jusqu'à cet instant, et finalement est déterminée dans une comparaison des deux images de différence sommées à titre d'essai, chez lequel le signal algébrique généré par la modulation du côté émetteur du paquet de données (d(i,j, m) en ce qui concerne les pixels est le plus fort pour l'image de différence sommée obtenue avec le signe algébrique.

**5.** Procédé selon la revendication 4, **caractérisé en ce que**,
pour la comparaison de la puissance du signal de données obtenu dans les images de différence sommées à l'essai avec des signes algébriques positifs et négatifs, la somme des contributions des valeurs d'intensité, où, ainsi, il s'agit de la hauteur de l'amplitude de la représentation numérique de l'image de différence sommée, de tous les pixels des images de différence résultantes sont comparées les unes aux autres (22).

**6.** Procédé selon la revendication 5, **caractérisé en ce que**
chaque prise de vue d'image (12) de la caméra (4), ou chacune des images de différence créées, est subdivisée en $n_v$ segments d'image verticaux (18) de même taille dans le récepteur (2), où la somme correcte avec le signe algébrique des images de différence créées est effectuée séparément pour chaque segment d'image vertical (18).

Fig. 1

Fig. 2

Fig. 3

Fig. 4

Fig. 5

Fig. 6

Fig. 7

Fig. 8

Fig. 9

24

$W/n_h = 240$ Pixel

$H/n_v = 216$ Pixel

18

$H = 1080$ pixel

$W = 1920$ pixel

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014008405 A1